(19) **Europäisches Patentamt**
**European Patent Office**
**Office européen des brevets**

(11) **EP 2 293 289 B1**

(12) **EUROPEAN PATENT SPECIFICATION**

(45) Date of publication and mention
of the grant of the patent:
**30.05.2012 Bulletin 2012/22**

(51) Int Cl.:
*G10L 15/08* (2006.01)      *G10L 15/10* (2006.01)
*G10L 15/20* (2006.01)

(21) Application number: **09758194.6**

(22) Date of filing: **11.05.2009**

(86) International application number:
**PCT/JP2009/058784**

(87) International publication number:
**WO 2009/147927 (10.12.2009 Gazette 2009/50)**

(54) **SPEECH RECOGNITION SYSTEM AND METHOD**

SPRACHERKENNUNGSSYSTEM UND -VERFAHREN.

SYSTÈME ET PROCÉDÉ DE RECONNAISSANCE DE LA PAROLE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **06.06.2008 JP 2008149732**

(43) Date of publication of application:
**09.03.2011 Bulletin 2011/10**

(73) Proprietor: **Raytron, Inc.**
**Osaka 541-0053 (JP)**

(72) Inventors:
• **YOSHIDA, Mitsuji**
**Osaka-shi**
**Osaka 541-0053 (JP)**
• **HYODO, Kazutaka**
**Osaka-shi**
**Osaka 541-0053 (JP)**

(74) Representative: **Prüfer & Partner GbR**
**European Patent Attorneys**
**Sohnckestrasse 12**
**81479 München (DE)**

(56) References cited:
WO-A1-00/46791          JP-A- 6 324 699
JP-A- 9 212 189          JP-A- 9 258 770
JP-A- 11 249 688          JP-A- 2001 215 996
JP-A- 2003 036 094          JP-A- 2006 215 315
US-A1- 2007 203 700          US-B1- 6 577 997

• **CAMINERO-GIL F J ET AL: "NEW N-BEST BASED REJECTION TECHNIQUES FOR IMPROVING A REAL-TIME TELEPHONIC CONNECTED WORD RECOGNITION SYSTEM", 4TH EUROPEAN CONFERENCE ON SPEECH COMMUNICATION AND TECHNOLOGY. EUROSPEECH '95. MADRID, SPAIN, SEPT. 18 - 21, 1995; [EUROPEAN CONFERENCE ON SPEECH COMMUNICATION AND TECHNOLOGY. (EUROSPEECH)], MADRID : GRAFICAS BRENS, ES, vol. 3, 18 September 1995 (1995-09-18), pages 2099-2102, XP000855123,**
• **JIANG ET AL: "Confidence measures for speech recognition: A survey", SPEECH COMMUNICATION, ELSEVIER SCIENCE PUBLISHERS, AMSTERDAM, NL, vol. 45, no. 4, 1 April 2005 (2005-04-01), pages 455-470, XP025258489, ISSN: 0167-6393, DOI: DOI: 10.1016/J.SPECOM.2004.12.004 [retrieved on 2005-04-01]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

This invention relates to speech recognition systems, a method for recognizing speech and electronic apparatuses, and in particular to a speech recognition system configured to recognize input speech on a registered phrase-by-phrase basis and reject candidates having low likelihood values from the recognition candidates, a method for recognizing speech and an electronic apparatus provided with such a speech recognition system.

Background Art

Some known speech recognition systems recognize input speech on a registered phrase-by-phrase basis. An example of those is the speech recognition system disclosed in Japanese Unexamined Patent Application Publication No. 2003-50595 (Patent Literature 1). This speech recognition system separates input speech into frames by a predetermined time interval, obtains power components of the respective frames, and detects speech segments from the values of the power components. Based on amounts of speech characteristics in each speech segment and HMMs (Hidden Markov Models), which is speech pattern sequence information prepared in advance, the first candidate phrase having the highest likelihood value is extracted from phrases contained in a phrase dictionary. In this example, the likelihood reliability of the extracted first candidate phrase is obtained, and if the likelihood reliability is equal to or lower than a threshold, the first candidate phrase is rejected.

Alternatively, some conventional electronic apparatuses are provided with a speech recognition function enabling recognition of input speech. One of such electronic apparatuses is disclosed in, for example, WO 2006/093003 (Patent Literature 2).

The electronic apparatus in Patent Literature 2 is a hard disk/DVD recorder that recognizes input speech in order to identify, for example, a program name to be recorded. More specifically, the electronic apparatus is configured to register, in advance, patterns of speech characteristic amounts corresponding to keywords of the program name, or, for example, patterns of characteristic amounts indicated by hidden Markov models. When speech including a keyword is input, the electronic apparatus extracts a pattern of characteristic amount of the input speech and calculates the similarities between the extracted characteristic amount pattern and the registered characteristic amount pattern to designate a program name with the highest similarities as the target program to be recorded.

Background Art Document

Patent Document

Patent Document 1: Japanese Unexamined Patent Application Publication No. 2003-50595
Patent Document 2: WO 2006/093003

Summary of Invention

Technical Problems

Generally, practical use of the speech recognition systems involves recognition errors caused by input of phrases that have not been registered yet (hereinafter, referred to as unregistered phrases) in addition to phrases that have been already registered (hereinafter, referred to as registered phrases) or by input of noise made in the usage environment together with speech. Given that a phrase "start" is registered, but "stop" is not registered. When a speaker utters "start" and the utterance is recognized as "start", the recognition is correct because "start" is a registered phrase.

However, even though the speaker utters "stop", if the utterance is recognized as "start", it can be said that "stop" is not recognized correctly because "stop" is an unregistered phrase. To avoid such a recognition error, if a registered phrase is suggested as a recognition candidate even though an unregistered phrase was uttered, the recognition candidate needs to be rejected. In addition to the unregistered phrases, noise input in a low S/N ratio environment may be incorrectly recognized as a registered phrase, such a candidate also needs to be rejected.

The speech recognition system disclosed in Patent Literature 1 uses only a likelihood value and a value used as a predetermined threshold for determining rejection. In a usage environment with a high noise level, the noise may be extracted as a speech recognition candidate and therefore the candidate needs to be rejected; however, the single threshold may be not enough to reject the speech recognition candidate corresponding to the noise, resulting in degradation of the recognition rate.

Especially when there are only few registered phrases, it is desirable to reject unregistered phrases in as early a processing stage as possible.

The electronic apparatus disclosed in Patent Literature 2 merely designates a program name with the highest similarity as a target program to be recorded. If, for example, the apparatus is used in a high noise level environment, the input noise may cause the electronic apparatus to designate a program name with the highest similarity to the pattern of the noise characteristic amount as the target program.

In view of the circumstances, the object of the present invention is to provide a speech recognition system capable of improving the recognition rate under noise conditions in consideration of actual usage environments.

In addition, the object of the present invention is to provide a speech recognition method capable of improving the recognition rate under noise conditions in consideration of actual usage environments.

Furthermore, the object of the present invention is to provide an electronic apparatus capable of improving the recognition rate and reliably performing predetermined operations based on speech.

Some state of the art solutions to these problems are represented by the following documents: document US2007/203700 discloses a speech recognition system wherein the rejection decision is based on both the highest likelihood value (L1) and the difference between the likelihood values of the two best candidates (L1-L2); document US6577997 is based analogously on L1 and L1-L2; document JP-9-258770, on the other hand, provides for a recognition filtering unit that takes into account the ratio between a) the likelihood difference between the two best candidates and b) the likelihood difference between the second best candidate and a lower ranked candidate.

Solution to Problems

The present invention is directed to a speech recognition system recognizing speech, uttered in a noise environment on a registered phrase-by-phrase basis, such as defined in claim 1. The speech recognition system includes a speech characteristic-amount calculation unit that calculates an amount of speech characteristics of each phrase in the uttered speech, a phrase storage unit that stores speech pattern sequence information of phrases, a likelihood value calculation unit that calculates likelihood values of a plurality of speech recognition candidates by comparing the amount of speech characteristics of a phrase calculated by the speech characteristic-amount calculation unit with the speech pattern sequence information of a plurality of the phrases stored in the phrase storage unit, a candidate extraction unit that, based on the likelihood values calculated by the likelihood value calculation unit, selects, in decreasing order of the likelihood values, a first speech recognition candidate, a second speech recognition candidate ranked lower than the first speech recognition candidate, and a third speech recognition candidate ranked lower than the second speech recognition candidate, and a recognition filtering unit that determines whether to reject or not reject the speech recognition candidates extracted by the candidate extraction unit based on the likelihood difference ratio between the difference in likelihood values between the first speech recognition candidate and the second speech recognition candidate and the difference in likelihood values between the second speech recognition candidate and the third speech recognition candidate.

When a speech recognition candidate that has speech pattern sequence information approximate to that of the first speech recognition candidate exists in the speech recognition candidates ranked lower than the first speech recognition candidate, the candidate extraction unit removes the speech recognition candidate and extracts a speech recognition candidate ranked lower than the speech recognition candidate.

The removal of the candidate approximate to the first speech recognition candidate by the candidate extraction unit can increase the recognition rate.

According to the aspect of the invention, determining whether to reject the speech recognition candidates to prevent the candidates from being targets to be subjected to recognition based on the likelihood difference ratio can reject the speech recognition candidates for the unregistered phrases and input noise, thereby increasing the rejection rate and improving the recognition rate.

More preferably, the recognition filtering unit rejects the first speech recognition candidate when the likelihood difference ratio is lower than a predetermined value, while regarding the first speech recognition candidate as a target to be subjected to speech recognition when the likelihood difference ratio is higher than the predetermined value.

This helps determine whether to adopt the selected first speech recognition candidate as the speech recognition target or reject it.

More preferably, the phrase storage unit stores the speech pattern sequence information categorized into groups according to speech characteristics, and the recognition filtering unit includes a first determination unit that determines whether to reject or not reject the extracted first speech recognition candidate based on the likelihood difference ratios of the groups categorized according to the speech characteristics.

Grouping the speech pattern sequence information according to the speech characteristics into men, women and children groups and determining whether to reject the extracted speech recognition candidates based on the likelihood difference ratios calculated for each group increases the rejection rate of the recognition filtering unit.

Preferably, the recognition filtering unit determines whether to reject or not reject the extracted first speech recognition candidate based on the difference between the likelihood value of the first speech recognition candidate and the likelihood value of the second speech recognition candidate. The likelihood value calculation unit extracts a fourth speech recognition candidate that is ranked lower than the third speech recognition candidate. The recognition filtering unit determines whether to reject or not reject the extracted speech recognition candidate based on the difference between the likelihood value of the first speech recognition candidate and the likelihood value of the fourth speech recognition candidate and determines whether to reject or not reject the extracted speech recognition candidate based on the likelihood value of the first speech recognition candidate.

By determining whether to reject the selected speech recognition candidates in this manner, the rate in which the candidates derived from the unregistered phrase and input noise are rejected can be increased.

Yet another aspect of the present invention is directed to a method for recognizing speech uttered in a noise environment on a registered phrase-by-phrase basis, such as defined in claim 7. The method includes the steps of calculating an amount of speech characteristics of each phrase in the uttered speech, calculating likelihood values of a plurality of speech recognition candidates treated as targets to be subjected speech recognition by comparing the amount of speech characteristics of a phrase with speech pattern sequence information of a plurality of phrases stored in advance, selecting a first speech recognition candidate, a second speech recognition candidate ranked lower than the first speech recognition candidate, and a third speech recognition candidate ranked lower than the second speech recognition candidate in decreasing order of the likelihood values based on the likelihood values calculated for each phrase, comparing a likelihood difference ratio between the difference in likelihood values between the selected first speech recognition candidate and the selected second speech recognition candidate and the difference in likelihood values between the selected second speech recognition candidate and the selected third speech recognition candidate, and determining, when the likelihood difference ratio is lower than a predetermined value, to reject the first speech recognition candidate, and when the likelihood difference ratio is higher than the predetermined value, to regard the first speech recognition candidate as a target to be subjected to speech recognition.

The method for recognizing speech in the aspect of the invention can increase the rate in which the speech recognition candidates derived from the unregistered phrases and noise are rejected, thereby improving the recognition rate.

Yet another aspect of the present invention is directed to an electronic apparatus including a speech recognition system recognizing speech uttered in a noise environment on a registered phrase-by-phrase basis, such as defined in claim 8.

The electronic apparatus is thus provided with the speech recognition system. This speech recognition system selects the plurality of speech recognition candidates in decreasing order of the likelihood values and determines whether to reject the selected speech recognition candidates based on their likelihood value distributions, thereby improving the recognition rate. As a result, the electronic apparatus can reliably perform predetermined operations based on speech.

Preferably, the likelihood value calculation unit calculates likelihood values of a plurality of speech recognition candidates. The candidate extraction unit selects a first speech recognition candidate, a second speech recognition candidate ranked lower than the first speech recognition candidate, and a third speech recognition candidate ranked lower than the second speech recognition candidate in decreasing order of the likelihood values based on the likelihood values calculated by the likelihood value calculation unit. The recognition filtering unit determines whether to reject or not reject the speech recognition candidates extracted by the candidate extraction unit based on the likelihood difference ratio between the difference in likelihood values between the first speech recognition candidate and the second speech recognition candidate and the difference in likelihood values between the second speech recognition candidate and the third speech recognition candidate.

The speech recognition system determines whether to reject the speech recognition candidates to prevent the candidates from being targets to be subjected to recognition based on the likelihood difference ratio, thereby increasing the rate in which the speech recognition candidates derived from the unregistered phrases and input noise are rejected and improving the recognition rate. As a result, the electronic apparatus can reliably perform predetermined operations based on speech.

In an embodiment, the speech recognized by the speech recognition system is associated with a predetermined number, and the predetermined number corresponds to an operation performed by the electronic apparatus.

In another embodiment, the operation is set in binary.

In yet another embodiment, the operation is set by multiple values. Advantageous Effects of Invention

The speech recognition system according to the present invention can determine whether to reject or not reject the selected speech recognition candidates based on the distributions of their respective likelihood values, thereby increasing the rejection rate and improving the recognition rate.

The method for recognizing speech according to the invention can increase the rate in which the speech recognition candidates derived from the unregistered phrases and input noise are rejected, resulting in improvement of the recognition rate.

The electronic apparatus according to the invention is provided with the speech recognition system. The speech recognition system is configured to select a plurality of speech recognition candidates in decreasing order of the likelihood values of the candidates and to determine whether to reject or not reject the selected speech recognition candidates based on the distributions of the likelihood values, thereby improving the recognition rate. As a result, the electronic apparatus can reliably perform predetermined operations based on speech.

Brief Description of the Drawings

FIG. 1 is a block diagram showing the structure of an electronic apparatus according to an embodiment of the invention.

FIG. 2 is a block diagram showing the structure of a speech recognition system shown in FIG. 1.

FIG. 3 illustrates likelihood value distributions derived from an utterance "Konnichiwa", which is a registered phrase, in a noise environment with an S/N ratio of 20 dB or higher.

FIG. 4 illustrates likelihood value distributions derived from an utterance "Konbanwa", which is an unregistered phrase, in a noise environment with an S/N ratio of 20 dB or higher.

FIG. 5 is a flow chart illustrating operations of a recognition filtering device shown in FIG. 2.

FIG. 6 is a flow chart illustrating registered phrase rejecting operations shown in FIG. 5.

FIG. 7 is a flow chart illustrating unregistered phrase rejecting operations shown in FIG. 5.

FIG. 8 is a flow chart illustrating group evaluating operations shown in FIG. 5.

FIG. 9 depicts distributions of the determination results obtained by evaluating a registered phrase "7 (Nana)" and unregistered phrase "3 (San)", which are uttered by five speakers, with determination information $\alpha$ by the recognition filtering device of the speech recognition system according to the embodiment of the invention.

FIG. 10 also depicts distributions of the determination results obtained by evaluating a registered phrase "7 (Nana)" and unregistered phrase "3 (San)" uttered by five speakers with determination information $\beta$.

FIG. 11 also depicts distributions of the determination results obtained by evaluating a registered phrase "7 (Nana)" and unregistered phrase "3 (San)" uttered by five speakers with determination information $\Delta$.

FIG. 12 also depicts distributions of the determination results obtained by evaluating a registered phrase "7 (Nana)" and unregistered phrase "3 (San)" uttered by five speakers with determination information Y.

FIG. 13 depicts distributions of the determination results obtained by evaluating a registered phrase "start" and unregistered phrase "stop" uttered by five speakers with determination information $\alpha$ by the recognition filtering device of the speech recognition system according to the embodiment of the invention.

FIG. 14 also depicts distributions of the determination results obtained by evaluating a registered phrase "start" and unregistered phrase "stop" uttered by five speakers with determination information $\beta$.

FIG. 15 also depicts distributions of the determination results obtained by evaluating a registered phrase "start" and unregistered phrase "stop" uttered by five speakers with determination information $\Delta$.

FIG. 16 also depicts distributions of the determination results obtained by evaluating a registered phrase "start" and unregistered phrase "stop" uttered by five speakers with determination information Y.

FIG. 17 depicts distributions of the determination results obtained by evaluating sounds, other than languages, that are input as 13 kinds of noises by the recognition filtering device of the speech recognition system according to the embodiment of the invention.

FIG. 18 also depicts distributions of the determination results obtained by evaluating sounds, other than languages, that are input as 13 kinds of noises with determination information $\alpha$.

FIG. 19 also depicts distributions of the determination results obtained by evaluating sounds, other than languages, that are input as 13 kinds of noises with determination information $\beta$.

FIG. 20 also depicts distributions of the determination results obtained by evaluating sounds, other than languages, that are input as 13 kinds of noises with determination information $\Delta$.

FIG. 21 also depicts distributions of the determination results obtained by evaluating sounds, other than languages, that are input as 13 kinds of noises with determination information Y.

FIG. 22 is a flow chart illustrating how to set the thresholds, or determination information $\alpha, \beta, \Delta, \gamma$, for each phrase.

FIG. 23 is a block diagram of a lighting apparatus used as the electronic apparatus in FIG. 1.

FIG. 24 is a flow chart showing operations of the lighting apparatus to turn the apparatus on.

FIG. 25 is a flow chart showing operations of the lighting apparatus to modulate the brightness.

FIG. 26 illustrates a remote controller used as the electronic apparatus.

FIG. 27 is a flow chart showing operations of the remote controller and a television to change the channel of the television.

Description of Embodiments

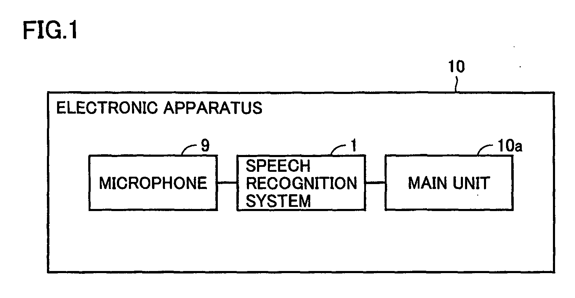

An embodiment of the present invention will be described below with reference to the drawings. FIG. 1 is a block diagram showing the structure of an electronic apparatus 10 according to the embodiment of the invention. Referring to FIG. 1, the electronic apparatus 10 includes a microphone 9 that accepts input of uttered speech, a speech recognition system 1 that recognizes the uttered speech, and a main unit 10a that is the principal unit of the electronic apparatus 10 and performs functions of the electronic apparatus 10. The speech recognition system 1 is externally attached to the main unit 10a.

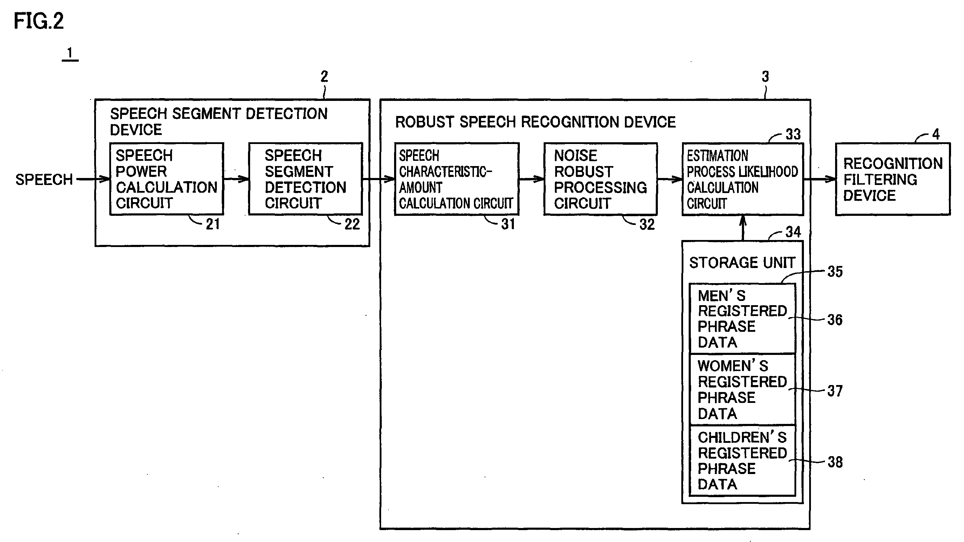

FIG. 2 is a block diagram showing the structure of the speech recognition system 1, shown in FIG. 1, according to the embodiment of the invention. With reference to FIG. 2, the structure of the speech recognition system 1 will be described in detail.

In FIG. 2, the speech recognition system 1 that is configured to recognize uttered speech on a registered phrase-by-phrase basis includes a speech segment detection device 2, a robust speech recognition device 3, and a recognition filtering device 4 serving as a recognition filtering unit and first to fourth determination units. The speech segment detection device 2 includes a speech power calculation circuit 21, which is supplied with input speech signals, and a speech segment detection circuit 22. The speech power calculation circuit 21 calculates a power component of an input speech signal. The speech segment detection circuit 22 detects speech segments based on the power component calculated by the speech power calculation circuit 21.

The robust speech recognition device 3 recognizes speech at high accuracy in a noise environment by removing noise other than the speech and includes a speech characteristic-amount calculation circuit 31 serving as a speech characteristic-amount calculation unit, a noise robust processing circuit 32, an estimation process likelihood calculation circuit 33 serving as a likelihood value calculation unit and a candidate extraction unit, and a storage unit 34 serving as a phrase storage unit.

The speech characteristic-amount calculation circuit 31 calculates an amount of speech characteristics in a detected speech segment. The noise robust processing circuit 32 removes noise components, but not the speech, contained in the speech characteristic amount obtained by the speech characteristic-amount calculation circuit 31. The storage unit 34 stores data 35 of speech HMMs, which represent a plurality of different phrases and are speech pattern sequence information. In this description, the data 35 includes a men's registered phrase data group 36, a women's registered phrase data group 37 and a children's registered phrase data group 38, those being speech HMMs categorized according to speech characteristics. Since men, women and children have different speech characteristics, storing the grouped speech HMMs of phrases enables identification of candidates with high likelihood values by calculation, thereby improving the recognition rate.

The groups are not limited to the men's, women's and children's groups, and the data 35 can be grouped into a men's high voice group and a men's low voice group, or other types of groups. Alternatively, the data 35 may not be grouped, but is organized as either one of the men's, women's, and children's groups to make rejection.

The estimation process likelihood calculation circuit 33 successively compares the speech characteristic amount in which the noise components are removed by the noise robust processing circuit 32 with the speech HMM data 35 stored in the storage unit 34 and performs processing for calculating a logarithmic likelihood value (hereinafter, abbreviated as likelihood value) for each phrase. Then, a plurality of speech recognition candidates (hereinafter, abbreviated as candidates) are selected in decreasing order of the likelihood values. The phrase having the highest likelihood value is referred to as a first candidate and the phrase having the second highest likelihood value is referred to as a second candidate.

The recognition filtering device 4 determines whether to reject or not reject each of the selected candidates based on the distributions of the likelihood values of the candidates selected by the estimation process likelihood calculation circuit 33.

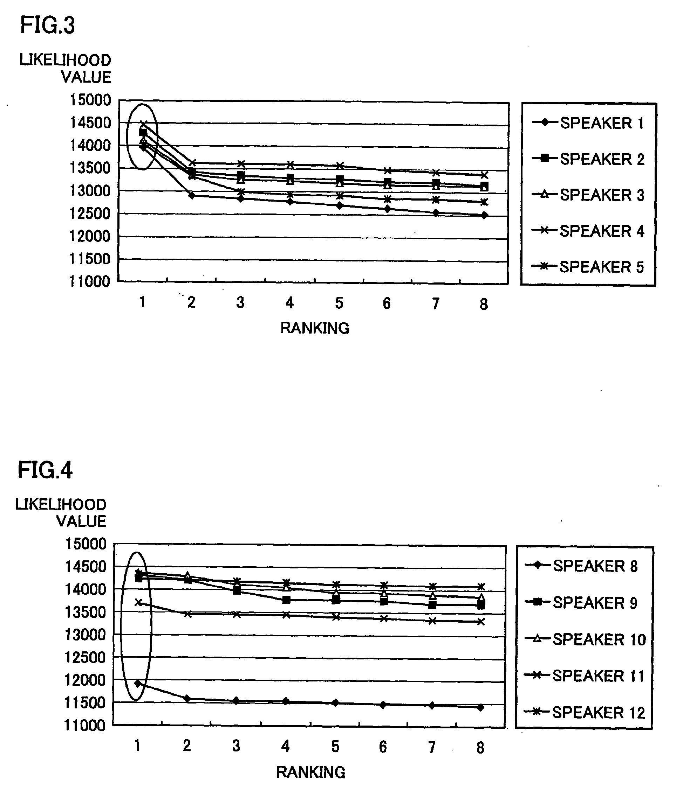

FIGS. 3 and 4 illustrate the principle of the present invention. The vertical axis represents likelihood values calculated by the estimation process likelihood calculation circuit 33, while the horizontal axis represents the ranking of the recognized phrase candidates from the first candidate having a high likelihood value to the eighth candidate having a low likelihood value.

When five speakers 1 to 5 utter a registered phrase (including a word), for example, "Konnichiwa (good afternoon", in a noise environment with a S/N ratio of 20 dB or higher, the distributions of the likelihood values of registered phrases calculated by the estimation process likelihood calculation circuit 33 results in what is shown in FIG. 3. In this example, the first candidate, or "Konnichiwa", exhibits the highest likelihood value. However, the estimation process likelihood calculation circuit 33 calculates, in addition to the first candidate's likelihood value, for example, the likelihood values of "Konbanwa (good evening)" as the second candidate, "Ohayo (good morning)" as the third candidate, "Tadaima (I'm home)" as the fourth candidate, "Oyasumi (good night)" as the fifth candidate, "Sayonara (good bye)" as the sixth candidate, "Bai-bai (Bye-bye)" as the seventh candidate, and "Mukatsuku (I'm angry) as the eighth candidate. However, as shown in FIG. 3, the likelihood values of the first candidate are extraordinarily high in comparison with those of the other candidates.

In addition to this, when five speakers 8 to 12 utter an unregistered phrase in the same environment, the likelihood value distributions of the first to eighth candidates of the registered phrases, calculated by the estimation process likelihood calculation circuit 33, results in what is shown in FIG. 4.

As apparent from the contrast between FIG. 3 and FIG. 4, there sometimes may not be much difference between the likelihood values of the first candidate upon utterance of the registered phrase and the likelihood values of the first candidate upon utterance of the unregistered phrase, and therefore it is difficult to make a decision to reject or not reject the candidates based on only the likelihood values of the first candidate.

As a result of the detailed examination of the likelihood value distributions in FIGS. 3 and 4, the inventors of the present invention discovered the following facts.

(A) Utterance of a registered phrase

(a) As shown in FIG. 3, the likelihood values of the first candidate are converged in a certain range in a noise environment of 20 dB or higher. Although it is not shown in the drawing, the likelihood values of the first candidate sometimes are not converged in a certain range in a noise environment of 10 dB or lower.

(b) Even in the noise environment of 10 dB or lower, the comparison of the difference in likelihood values between the first candidate and the second candidate with the difference in likelihood values between the second candidate and the third candidate or a lower ranked candidate shows that the former difference is often greater.

(B) Utterance of an unregistered phrase

(a) Some of the likelihood values of the first candidate shown in FIG. 4 are the same as the likelihood values obtained when the registered phrases are uttered in FIG. 3.

(b) The difference in likelihood values between the first candidate and the second candidate or a lower ranked candidate is not so great.

(c) The likelihood values of the first candidate are greatly different according to the speakers.

In consideration of these results, the inventors performed experiments using various kinds of phrase data to determine whether to reject or adopt the extracted first candidate, and consequently found out that the recognition rate was improved by setting thresholds in view of the following conditions to determine rejection or adoption of each candidate.

From a plurality of extracted candidates, a first candidate and a plurality of candidates ranked lower than the first candidate are selected for every phrase in decreasing order of their likelihood values and the selected candidates are rejected or adopted based on the distributions of the likelihood values of the respective candidates. The likelihood value distributions can serve as a base for setting the thresholds that increase the rejection rate and improve the recognition rate.

For more specific explanation, an example of the likelihood value distributions will be given below. In the example, likelihood difference ratios of the candidates and likelihood values are obtained and compared with thresholds $\alpha$, $\beta$, $\Delta$, $\gamma$. The thresholds $\alpha$, $\beta$, $\Delta$, $\gamma$ are determination information and are preset to the men's registered phrase data group 36, women's registered phrase data group 37 and children's registered phrase data group 38, in the storage unit 34, in an appropriate form for each of the data.

(1) The likelihood difference ratio can be calculated by obtaining the ratio between the difference in likelihood values between the first candidate and the second candidate and the difference in likelihood values between the second candidate and a lower-ranked Mth candidate (e.g., sixth candidate). The likelihood difference ratio thus obtained with the difference in likelihood values between the first candidate and second candidate and the difference in likelihood values between the second candidate and the lower-ranked Mth candidate and a first threshold $\alpha$ are used to make the determination. Expression 1 is calculated to compare with the threshold $\alpha$.

$$\text{(likelihood value of first candidate-likelihood value of second candidate)/(likelihood value of second candidate-likelihood value of Mth candidate)} \geq \alpha \ ... \ \text{(Expression 1)}$$

Note that Expression 1 uses $\geq\alpha$ to make the determination; however, $>\alpha$ can be also used. In addition, the Mth candidate can be any one of the candidates including the third candidate and candidates ranked lower than the third candidate. As described above, the recognition rate can be improved by calculating the likelihood difference ratio between the first candidate and second candidate and between the second candidate and the Mth candidate. However, even though the calculation result of Expression 1 exhibits that the likelihood difference ratio is equal to or greater than the threshold $\alpha$, if there is not much difference in likelihood values between the first candidate and the second candidate, as in the case of the unregistered phrase shown in FIG. 4, it cannot be determined that the first candidate was uttered.

(2) Expression 2 is calculated to compare with a second threshold $\beta$.

$$\text{(likelihood value of first candidate-likelihood value of second candidate)} > \beta \ ... \ \text{(Expression 2)}$$

Note that Expression 2 uses $>\beta$ to make the determination; however, $\geq\beta$ can be also used. In many cases, just Expression 1 and Expression 2 work well to reject first candidates having a low recognition rate, which increases the processing speed. However, even though Expression 1 and Expression 2 are satisfied, there may be some cases where the first candidate and the third candidate or a lower-ranked candidate have not much difference in likelihood values, as in the case of the unregistered phrase shown in FIG. 4. In other words, the difference in likelihood values between the first candidate and the third candidate or a lower-ranked candidate is required to be large to some extent to determine the first candidate as a recognition candidate.

(3) Expression 3 is calculated to compare with a third threshold $\Delta$. In Expression 3, the Nth candidate is a candidate ranked equal to or lower than the third candidate, for example.

$$\text{(likelihood value of first candidate-likelihood value of Nth candidate)} > \Delta \ ... \ \text{(Expression 3)}$$

Note that Expression 3 uses $>\Delta$ to make the determination; however, $\geq\Delta$ can be also used. Thus, satisfying Expression 1, Expression 2 and Expression 3 can improve the recognition rate.

Furthermore, since the first candidate with a small likelihood value cannot be regarded as a recognition candidate as in the case of the unregistered phrase shown in FIG. 4, the first candidate is required to have a large likelihood value to some extent.

(4) Expression 4 is calculated to compare with a fourth threshold $\gamma$.

$$\text{(likelihood value of first candidate)} > \gamma \ ... \ \text{(Expression 4)}$$

Note that Expression 4 uses $>\gamma$ to make the determination; however, $\geq\gamma$ can be also used.

The following are the reasons why the Mth candidate is selected in Expression 1 and the Nth candidate is selected in Expression 3. The comparison with $\alpha$ is made by obtaining a ratio between the difference in likelihood values between the first candidate and the second candidate and the difference in likelihood values between the second candidate and the third candidate or a candidate ranked lower than the third candidate, the ratio being also referred to as gradient. The differences in likelihood values between the second candidate and third candidate or a candidate ranked lower than the third candidate are converged to a value at a point and the Mth candidate is the one ranked higher as possible at the point in order to minimize variations in the gradients according to the speakers. From experimental data, the differences in likelihood values between the second candidate and third candidate, between the third candidate and fourth candidate, between the fourth candidate and fifth candidate, between the fifth candidate and sixth candidate, between the sixth candidate and seventh candidate, and between the seventh candidate and eighth candidate are obtained, and a candidate at a point in which the difference values are converged to 60 or lower is regarded as the Mth candidate (sixth candidate). Suppose that the Mth candidate is the sixth candidate "Sayonara" and the Nth candidate is the eighth candidate "Mukatsuku", the Nth candidate is the lowest ranked candidate.

In this description, the number of candidates to be selected is assumed to be six. When phrases having speech HMMs whose likelihood values are very close to that of the first candidate phrase (hereinafter, referred to as an approximate phrase) are selected as the second and third candidates, Expressions 1 to 4 sometimes cannot be satisfied. To prevent this, approximate phrases are prepared for every phrase. If the approximate phrases to the first candidate are successively ranked in the second and third candidates, the phrases are removed and the determinations as described in (1) and (2) are performed. In the above example, the second candidate "Konbanwa" and the third candidate "Ohayo" are removed as approximate phrases. The fourth candidate "Tadaima" is ranked in the second candidate from the fourth candidate, the fifth candidate "Oyasumi" is ranked in the third candidate from the fifth candidate, the sixth candidate "Good bye" is ranked in the fourth candidate from the sixth candidate, the seventh candidate "Bai Bai" is ranked in the fifth candidate from the seventh candidate, and the eighth candidate "Mukatsuku" is ranked in the lowest-ranked sixth candidate (Nth candidate) from the eighth candidate. Irrespective of the presence or absence of the approximate phrase, the lowest-ranked Nth candidate (eighth candidate) is selected for comparison with $\Delta$ in Expression 3.

By the way, registered-phrase determination information ($\alpha_i$, $\beta_i$, $\Delta_i$, $\gamma_i$) can be set as thresholds used to determine that the utterance is a registered phrase, while unregistered-phrase determination information ($\alpha_o$, $\beta_o$, $\Delta_o$, $\gamma_o$) can be set individually as thresholds used to determine that the utterance is an unregistered phrase.

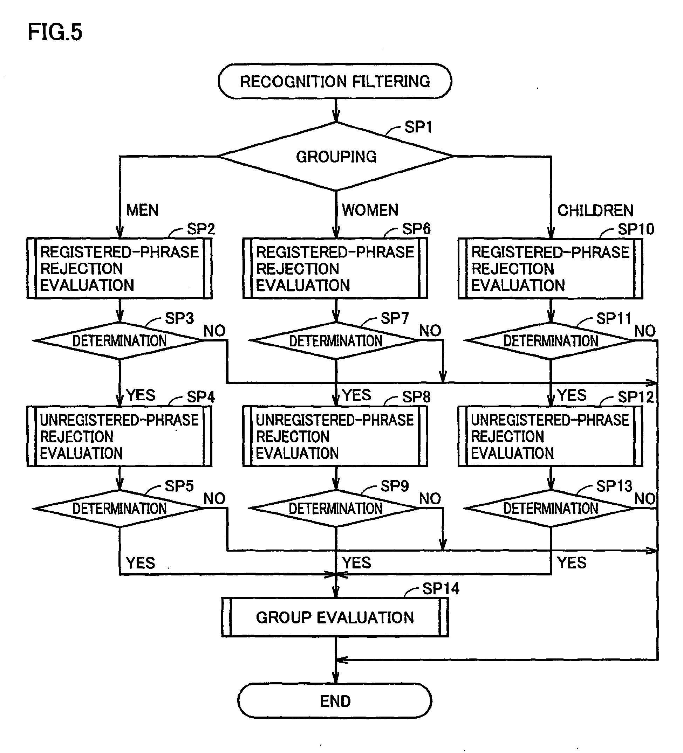

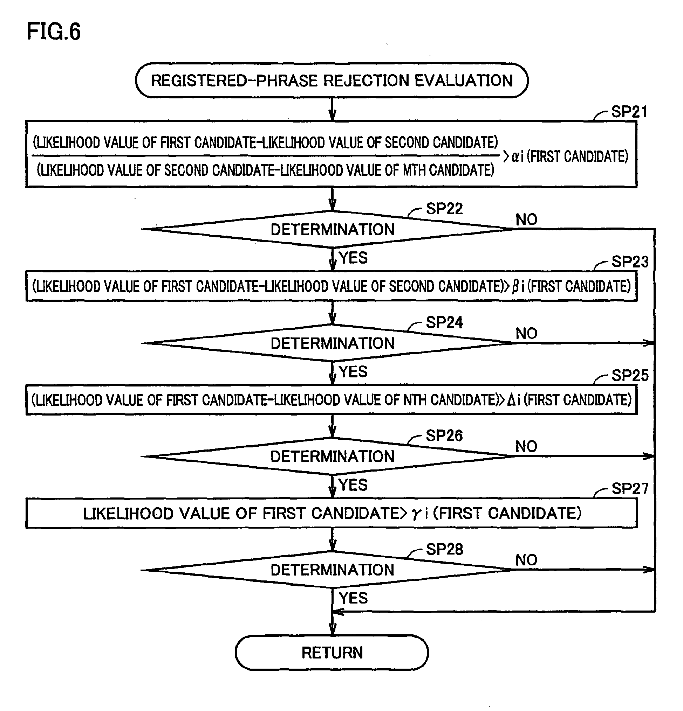

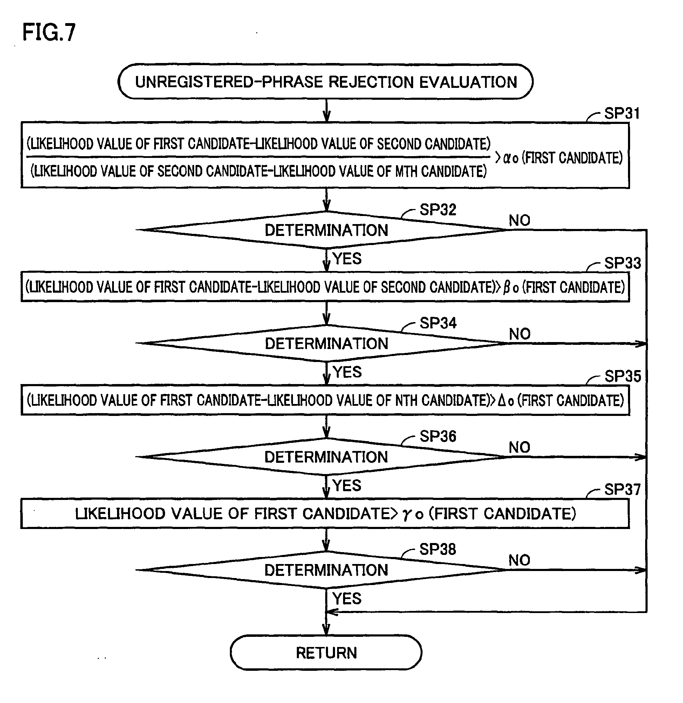

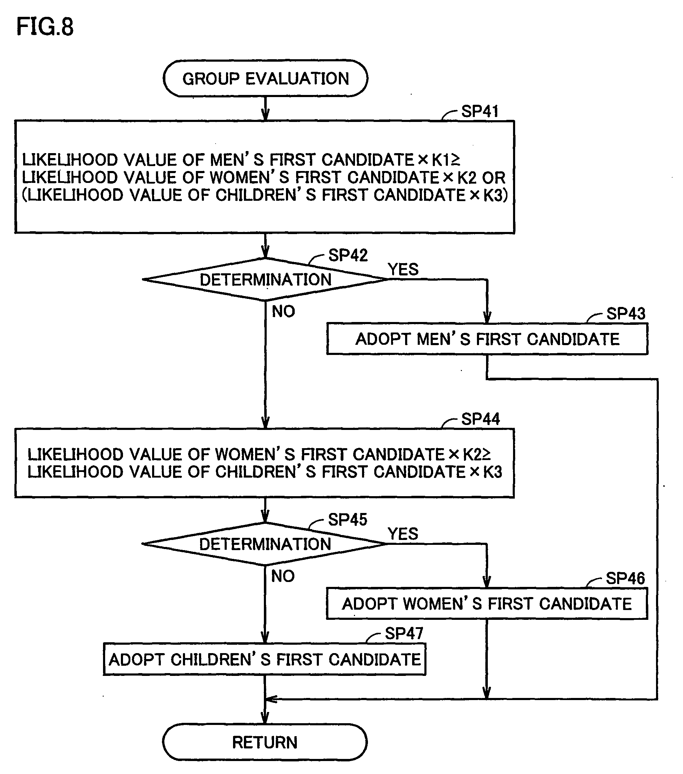

FIG. 5 is a flow chart illustrating operations of the recognition filtering device 4 shown in FIG. 2. FIG. 6 is a flow chart illustrating operations of registered phrase rejection evaluating subroutines shown in FIG. 5. FIG. 7 is a flow chart illustrating operations of unregistered-phrase rejection evaluating subroutines shown in FIG. 5. FIG. 8 is a flow chart illustrating operations of group evaluating subroutines shown in FIG. 5.

Referring to FIGS. 5 to 8, specific operations of the speech recognition system 1 according to the embodiment of the present invention will be described.

The speech segment detection device 2 of the speech recognition system 1 detects speech segments from an input speech signal and feeds a speech detection signal to the robust speech recognition device 3. The speech characteristic-amount calculation circuit 31 of the robust speech recognition device 3 calculates an amount of speech characteristics of an input speech phrase, and the noise robust processing circuit 32 removes noise components except for the speech.

The estimation process likelihood calculation circuit 33 calculates likelihood values based on the calculated speech characteristic amount and the data 35 stored in the storage unit 34. More specifically, the likelihood values of candidates from the characteristically-categorized men, women and children groups are calculated based on the men's registered phrase data 36, women's registered phrase data 37 and children's registered phrase data 38 in the storage unit 34. Calculation of the likelihood values is performed in the order from the first candidate, second candidate, third candidate, and then the lower-ranked candidates.

If the estimation process likelihood calculation circuit 33 is a hardware circuit, calculation of the likelihood values of the respective men's, women's and children's candidates can be performed at the same time. Alternatively, if the calculation of the likelihood values by the estimation process likelihood calculation circuit 33 is performed through software processes, the likelihood values of the candidates are successively performed, for example, from the men's, women's to children's candidates.

The recognition filtering device 4 executes recognition filtering processing along with the flow chart, in FIG. 5, illustrated for the recognition filtering processing. Specifically, at step (abbreviated as SP in the drawings) SP1 in FIG. 5, grouping processing into men, women and children groups is performed. The grouping processing determines which of the men, women and children groups the candidate whose likelihood value was calculated by the estimation process likelihood calculation circuit 33 is in. For example, if the likelihood value of a men's candidate is calculated, the processing goes to step SP2, if the likelihood value of a women's candidate is calculated, the processing goes to step SP6, and if the likelihood value of a children's candidate is calculated, the processing goes to step SP10.

In this description, it is assumed that the likelihood value of a men's candidate is calculated. At step SP2, registered-phrase rejection evaluation is performed. The registered-phrase rejection evaluation processing is a process for evaluating a first candidate with the men's registered-phrase determination information ($\alpha_i$, $\beta_i$, $\Delta_i$, $\gamma_i$), which are thresholds for determining whether to reject or adopt the first candidate based on the calculated likelihood values of the candidates. At step SP3, it is determined whether to reject (NO) or adopt (YES) the evaluated first candidate. In the case of rejection, the processing is terminated. If the first candidate is adopted, unregistered-phrase rejection evaluation is performed at step SP4.

The unregistered-phrase rejection evaluating processing in step SP4 is a process for evaluating whether to reject or adopt the first candidate with the men's unregistered-phrase determination information ($\alpha o$, $\beta o$, $\Delta o$, $\gamma o$) based on the calculated likelihood values of the candidates. At step SP5, it is determined whether to reject (NO) or adopt (YES) the evaluated first candidate.

In the case where the likelihood value of a women's candidate was calculated, processing from steps SP6 to SP9 is executed in the same manner as the processing for men's candidate based on the women's registered-phrase determination information ($\alpha i$, $\beta i$, $\Delta i$, $\gamma i$) and women's unregistered-phrase determination information ($\alpha o$, $\beta o$, $\Delta o$, $\gamma o$). In the case where the likelihood value of a children's candidate was calculated, processing from steps SP10 to SP13 is executed based on the children's registered-phrase determination information ($\alpha i$, $\beta i$, $\Delta i$, $\gamma i$) and children's unregistered-phrase determination information ($\alpha o$, $\beta o$, $\Delta o$, $\gamma o$). The first candidate is determined to be adopted through the processing from steps SP2 to SP13 then undergoes group evaluation at step SP14. The group evaluation processing in step SP14 can make a correct determination by evaluating the candidates on a group-to-group basis, even if voices are in different frequency bands as with the case the men, women and children candidates are different.

Next, the registered-phrase rejection evaluating processing in FIG. 5 will be described in detail with reference to subroutines shown in FIG. 6. Although FIG. 5 shows that the registered-phrase rejection evaluation processing is executed in step SP2 and determination processing is executed in step SP3, more specifically speaking, the registered rejection evaluating processing and determination processing are performed according to registered-phrase rejection evaluating processing shown in FIG. 6.

At step SP21, the aforementioned Expression 1 is calculated, and the calculation result is compared to the registered-phrase determination information $\alpha i$, which is a first threshold. At step SP22, it is determined whether the calculation result of Expression 1 is larger than the registered-phrase determination information $\alpha i$. If the calculation result is larger than the registered-phrase determination information $\alpha i$, the first candidate is determined as an adopted candidate (YES), and the processing goes to step SP23 where a calculation is performed. If not (NO), the registered-phrase rejection processing is terminated.

At step SP23, Expression 2 is calculated, and the calculated result is compared to the registered-phrase determination information $\beta i$, which is a second threshold. At step SP24, it is determined whether the calculated result of Expression 2 is larger than the registered-phrase determination information $\beta i$. If the calculated result is larger than the registered-phrase determination information $\beta i$, the determination YES is made, and the processing goes to step SP25 where a calculation is performed, and if not, the determination NO is made and the registered-phrase rejection processing is terminated.

At step SP25, Expression 3 is calculated, and the calculated result is compared to the registered-phrase determination information $\Delta i$, which is a third threshold. At step SP26, it is determined whether the calculated result of Expression 3 is larger than the registered-phrase determination information $\Delta i$. If the calculated result is larger than the registered-phrase determination information $\Delta i$, the determination YES is made, and if not, the determination NO is made and the registered-phrase rejection processing is terminated.

In comparative processing in step SP27, it is determined whether the likelihood value of the first candidate is larger than the registered-phrase determination information $\gamma i$, which is a fourth threshold. At step SP28, in response to the determination result whether the likelihood value of the first candidate is larger than the registered-phrase determination information $\gamma i$, the registered-phrase rejection processing is terminated. The candidates that are determined to be NO through the processing at steps SP22, SP24, SP26 and SP28 are rejected, while the candidates that are determined to be YES in all steps are adopted. Then, subsequent to the processing in step SP28, the candidate returns to the processing shown in the flow chart of FIG. 5.

Although FIG. 5 shows that the unregistered-phrase rejection evaluating processing is performed by executing the unregistered-phrase rejection evaluating processing in step SP4 and determination processing in step SP5, more specifically speaking, the unregistered-phrase rejection evaluating processing and determination process are performed according to unregistered-phrase rejection evaluating processing shown in FIG. 7. In short, the aforementioned Expressions 1 to 4 are calculated based on the obtained likelihood values of the candidates, and each of the candidates are determined whether to be rejected or not with the unregistered-phrase determination information ($\alpha o$, $\beta o$, $\Delta o$, $\gamma o$), which are thresholds used for the determination.

At step SP31, Expression 1 is calculated, and the calculated result is compared to the unregistered-phrase determination information $\alpha o$, which is a threshold. At step SP32, it is determined whether the calculated result of Expression 1 is larger than the unregistered-phrase determination information $\alpha o$. If the calculated result is larger than the unregistered-phrase determination information $\alpha o$, the determination YES is made and the processing goes to step SP33 where a calculation is performed, and if not, the determination NO is made and the unregistered-phrase rejection processing is terminated. At step SP33, Expression 2 is calculated, and the calculated result is compared to the unregistered-phrase determination information $\beta o$.

At step SP34, it is determined whether the calculated result of Expression 2 is larger than the unregistered-phrase determination information $\beta o$. If the calculated result is larger than the unregistered-phrase determination information $\beta o$, the determination YES is made and the processing goes to step SP35 where a calculation is performed, and if not, the determination NO is made and the unregistered-phrase rejection processing is terminated. At step SP35, Expression 3 is calculated, and the calculated result is compared to the unregistered-phrase determination information Δo.

At step SP36, it is determined whether the calculated result of Expression 3 is larger than the unregistered-phrase determination information Δo. If the calculated result is larger than the unregistered-phrase determination information Δo, the determination YES is made and the processing goes to step SP37 where comparison processing is performed using Expression 4, and if not, the registered-phrase rejection processing is terminated. In the comparison processing at step SP37, it is determined whether the likelihood value of the first candidate is larger than the unregistered-phrase determination information γo. At step SP38, in response to the determination result whether the likelihood value of the first candidate is larger than the unregistered-phrase determination information γo, the unregistered-phrase rejection processing is terminated. The candidates that are determined as being NO through the processing at steps SP32, SP34, SP36 and SP38 are rejected, while the candidates that are determined as being YES in all steps are adopted.

If a first candidate is adopted in the registered phrase rejection evaluating processing in FIG. 6 and a different first candidate is adopted in the unregistered-phrase rejection evaluating processing shown in FIG. 7, the candidate with a higher likelihood difference ratio can be selected.

The group evaluation processing shown in FIG. 5 is performed by executing the subroutines shown in FIG. 8.

At step SP41 in FIG. 8, Expression 5 shown below is calculated.

$$\text{(likelihood value of men's first candidate} \times K1) \geq$$
$$\text{(likelihood value of women's first candidate} \times K2) \text{ or (likelihood value of children's first candidate} \times K3) \dots \text{(Expression 5)}$$

Note that Expression 5 uses ≥ to make the determination; however, > can be also used.

K1, K2, K3 are constants preset to the candidates of men, women, children, respectively, and are prescribed at a predetermined ratio. Since children's speech HMMs have a wide range of variations, K3 is set smaller than the K1 and K2 used for the men's and women's speech HMMs.

At step SP42, if the result of Expression 5 indicates that the likelihood value of the men's first candidate is greater than the likelihood value of the women's first candidate or the children's first candidate (YES), the men's first candidate phrase is adopted as a recognition candidate at step SP43. At step SP42, if it is determined that the likelihood value of the men's first candidate is not greater than the likelihood value of the women's first candidate or the children's first candidate (NO), Expression 6 is calculated in step SP44.

$$\text{(likelihood value of women's first candidate} \times K2) \geq \text{(likelihood value of children's first candidate} \times K3) \dots \text{(Expression 6)}$$

Note that Expression 6 uses ≥ to make the determination; however, > can be also used.

At step SP45, if the result of Expression 6 indicates that the likelihood value of the women's first candidate is larger than the likelihood value of the children's first candidate (YES), the women's first candidate phrase is adopted as a recognition candidate at step SP46. If the likelihood value of the women's first candidate is not larger than the likelihood value of the children's first candidate (NO), the children's first candidate phrase is adopted as a recognition candidate at step SP47.

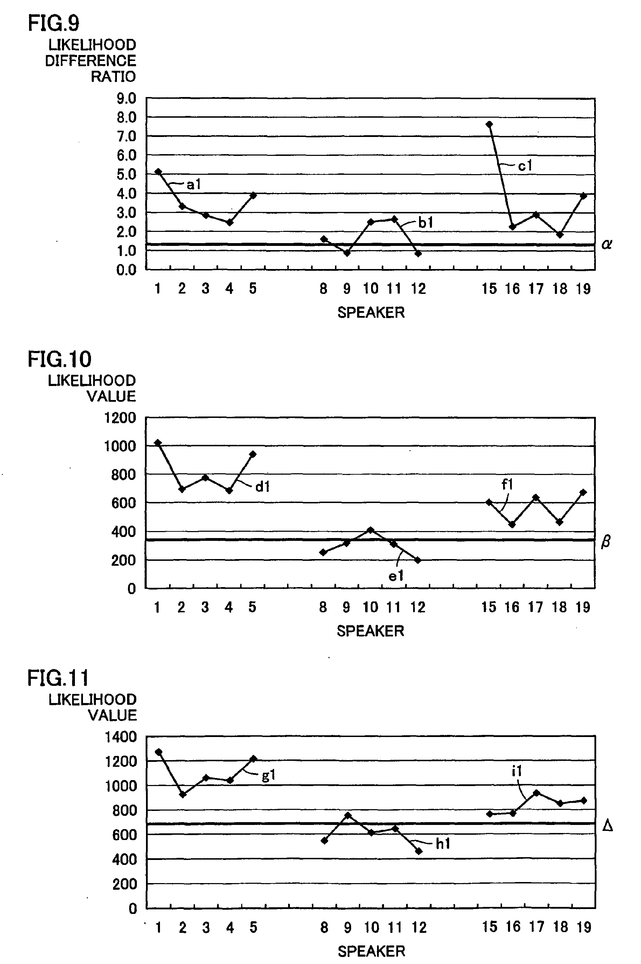

FIGS. 9 to 12 illustrate operations for maintaining uttered phrases in the registered phrases and rejecting unregistered phrases through the processing shown in FIGS. 5 to 8. In this description, the determination information α, β, Δ, γ for registered phrases and the determination information α, β, Δ, γ for unregistered phrases have the same values.

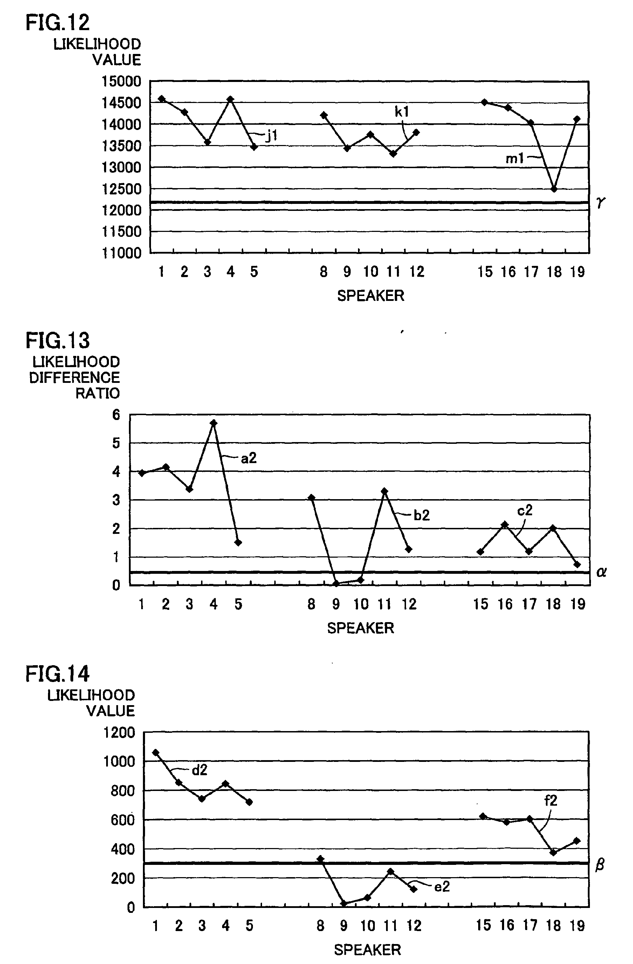

FIG. 9 shows likelihood difference ratios of the candidates obtained by Expression 1 on a vertical axis. FIG. 10 shows differential likelihood values, on the vertical axis, which are obtained by subtracting the likelihood value of the second candidate from the likelihood value of the first candidate using Expression 2. FIG. 11 shows differential likelihood values, on the vertical axis, which are obtained by subtracting the likelihood value of the eighth candidate from the likelihood value of the first candidate using Expression 3. FIG. 12 shows likelihood values of the first candidate, on the vertical axis, which are obtained using Expression 4. The horizontal axis of each drawing uses numbers to indicate speakers.

The characteristic a1 in FIG. 9 indicates likelihood difference ratios of candidates when speakers 1 to 5 utter a registered phrase, for example, "7 (Nana)" in a noise environment with an S/N ratio of 20 dB or higher. The characteristic b1 indicates likelihood difference ratios of candidates when speakers 8 to 12 utter an unregistered phrase, for example, "3 (San)" in a noise environment with an S/N ratio of 20 dB or higher. The characteristic c1 indicates likelihood difference ratios of candidates when speakers 15 to 19 utter a registered phrase, for example, "7 (Nana)" in a noise environment with an S/N ratio of 10 dB or lower.

The characteristic d1 in FIG. 10 indicates differential likelihood values of candidates (difference in likelihood between the first candidate and second candidate) recognized when the speakers 1 to 5 utter a registered phrase, or "7 (Nana)", in a noise environment with an S/N ratio of 20 dB or higher. The characteristic e1 indicates differential likelihood values of candidates (difference in likelihood between the first candidate and second candidate) recognized when the speakers 8 to 12 utter an unregistered phrase, or "3 (San)", in a noise environment with an S/N ratio of 20 dB or higher. The characteristic f1 indicates differential likelihood values of candidates (difference in likelihood between the first candidate and second candidate) recognized when the speakers 15 to 19 utter a registered phrase, or "7 (Nana)", in a noise environment with an S/N ratio of 10 dB or lower.

The characteristic g1 in FIG. 11 indicates differential likelihood values of candidates (difference in likelihood between the first candidate and eighth candidate) recognized when the speakers 1 to 5 utter a registered phrase, or "7 (Nana)", in a noise environment with an S/N ratio of 20 dB or higher. The characteristic h1 indicates differential likelihood values of candidates (difference in likelihood between the first candidate and eighth candidate) recognized when the speakers 8 to 12 utter an unregistered phrase, or "3 (San)", in a noise environment with an S/N ratio of 20 dB or higher. The characteristic i1 indicates differential likelihood values of candidates (difference in likelihood between the first candidate and eighth candidate) recognized when the speakers 15 to 19 utter a registered phrase, or "7 (Nana)", in a noise environment with an S/N ratio of 10 dB or lower.

The characteristic j1 in FIG. 12 indicates likelihood values of the first candidate recognized when speakers 1 to 5 utter a registered phrase, or "7 (Nana)", in a noise environment with an S/N ratio of 20 dB or higher. The characteristic k1 indicates likelihood values of the first candidate recognized when the speakers 8 to 12 utter an unregistered phrase, or "3 (San)", in a noise environment with an S/N ratio of 20 dB or higher. The characteristic m1 indicates likelihood values of the first candidate recognized when the speakers 15 to 19 utter a registered phrase, or "7 (Nana)", in a noise environment with an S/N ratio of 10 dB or lower.

As to the characteristics in FIG. 9, if the determination information $\alpha$, which is a threshold represented by a thick line, is set to, for example, "1.3", the candidates of the registered phrase uttered by the speakers 1 to 5 in regard to the characteristic a1 and the candidates of the registered phrase uttered by the speakers 15 to 19 in regard to the characteristic c1, those of which have values of the likelihood difference ratio equal to or higher than the determination information $\alpha$, can be adopted, while the candidates of the unregistered phrase uttered by the speakers 9 and 12 in regard to the characteristic b1, those of which have values of the likelihood difference ratio equal to or lower than the determination information $\alpha$, can be rejected.

In FIG. 10, if the determination information $\beta$, which is a threshold represented by a thick line, is set to "350", the candidates of the registered phrase uttered by the speakers 1 to 5 in regard to the characteristic d1 and the candidates of the registered phrase uttered by the speakers 15 to 19 in regard to the characteristic f1, those of which have differential likelihood values equal to or higher than the determination information $\beta$, can be adopted, while the candidates of the unregistered phrase uttered by the speakers 8, 9, 11 and 12 in regard to the characteristic e1, those of which have differential likelihood values equal to or lower than the determination information $\beta$, can be rejected.

In FIG. 11, if the determination information $\Delta$, which is a threshold represented by a thick line, is set to "700", the candidates of the registered phrase uttered by the speakers 1 to 5 in regard to the characteristic g1 and the candidates of the registered phrase uttered by the speakers 15 to 19 in regard to the characteristic i1, those of which have differential likelihood values equal to or higher than the determination information $\Delta$, can be adopted, while the candidates of the unregistered phrase uttered by the speakers 8, 10, 11 and 12 in regard to the characteristic h1, those of which have differential likelihood values equal to or lower than the determination information $\Delta$, can be rejected.

In FIG. 12, if the determination information $\gamma$, which is a threshold represented by a thick line, is set to "12300", the candidates of the registered phrase uttered by the speakers 1 to 5 in regard to the characteristic j1 and the candidates of the registered phrase uttered by the speakers 15 to 19 in regard to the characteristic m1, those of which have likelihood values equal to or higher than the determination information $\gamma$, can be adopted. Optimal setting of the determination information $\alpha$, $\beta$, $\Delta$, $\gamma$, enables adoption of the candidates of the registered phrase and rejection of the candidates of the unregistered phrase. Such optimal determination information can be obtained by, for example, preparing data of one hundred sample phrases for a single phrase, assigning actual values to each of the determination information $\alpha$, $\beta$, $\Delta$, $\gamma$, and employing values that enables a high rejection rate as determination information.

In FIGS. 9 to 12, the determination information $\alpha$, $\beta$, $\Delta$, $\gamma$, which are thresholds in Expressions 1 to 4, are used to improve the processing speed. Specifically, the values of $\alpha i$ and $\alpha o$ are obtained from the registered-phrase determination information ($\alpha i$, $\beta i$, $\Delta i$, $\gamma i$) and unregistered-phrase determination information ($\alpha o$, $\beta o$, $\Delta o$, $\gamma o$), and the value making the rejection rate optimal is defined as $\alpha$. These values are defined as optimal parameters based on likely the most preferable data to perform speech recognition as a result of simulations of every phrase having the highest likelihood value on a computer. Similarly, the values of $\beta i$, $\Delta i$, $\gamma i$ and $\beta o$, $\Delta o$, $\gamma o$ are respectively obtained, and the values making the rejection rate optimal are defined as $\beta$, $\Delta$ and $\gamma$. As to the characteristics b1, e1 and h1, the candidates are discarded through the processing in FIGS. 9, 10 and 11.

FIGS. 13 to 16 also represent characteristics of distributions derived from evaluations with thresholds, or determination information $\alpha$, $\beta$, $\Delta$, $\gamma$, when five speakers utter a registered phrase "start" or an unregistered phrase "stop" or when noises other than languages are input.

In FIG. 13, the vertical axis denotes likelihood difference ratios, while the horizontal axis uses numbers to denote speakers. The characteristic a2 indicates likelihood difference ratios of candidates when the speakers 1 to 5 utter a registered phrase "start" in a noise environment with an S/N ratio of 20 dB or higher. The characteristic b2 indicates likelihood difference ratios of candidates when the speakers 8 to 12 utter an unregistered phrase "stop" in a noise environment with an S/N ratio of 20 dB or higher. The characteristic c2 indicates likelihood difference ratios of candidates when the speakers 15 to 19 utter the registered phrase "start" in a noise environment with an S/N ratio of 10 dB or lower.

In FIG. 14, the vertical axis denotes likelihood values, while the horizontal axis uses numbers to denote speakers. The characteristic d2 indicates the differential likelihood values of candidates (difference in likelihood between the first candidate and second candidate) when the speakers 1 to 5 utter a registered phrase "start" in a noise environment with an S/N ratio of 20 dB or higher. The characteristic e2 indicates the differential likelihood values of candidates (difference in likelihood between the first candidate and second candidate) when the speakers 8 to 12 utter an unregistered phrase "stop" in a noise environment with an S/N ratio of 20 dB or higher. The characteristic f2 indicates differential likelihood values of candidates (difference in likelihood between the first candidate and second candidate) when the speakers 15 to 19 utter the registered phrase "start" in a noise environment with an S/N ratio of 10 dB or lower.

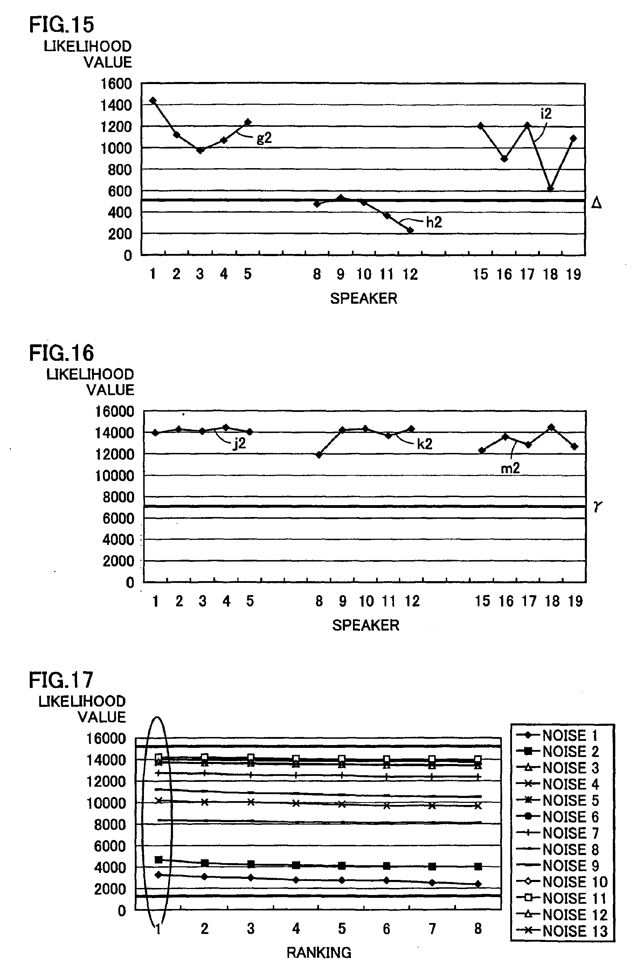

In FIG. 15, the vertical axis denotes likelihood values, while the horizontal axis uses numbers to denote speakers. The characteristic g2 indicates the differential likelihood values of candidates (difference in likelihood between the first candidate and eighth candidate) when the speakers 1 to 5 utter a registered phrase "start" in a noise environment with an S/N ratio of 20 dB or higher. The characteristic h2 indicates differential likelihood values of candidates (difference in likelihood between the first candidate and eighth candidate) when the speakers 8 to 12 utter an unregistered phrase "stop" in a noise environment with an S/N ratio of 20 dB or higher. The characteristic i2 indicates the differential likelihood values of candidates (difference in likelihood between the first candidate and eighth candidate) when the speakers 15 to 19 utter the registered phrase "start" in a noise environment with an S/N ratio of 10 dB or lower.

In FIG. 16, the vertical axis denotes likelihood values, while the horizontal axis uses numbers to denote speakers. The characteristic j2 indicates likelihood values of candidates (likelihood value of the first candidate) when the speakers 1 to 5 utter a registered phrase "start" in a noise environment with an S/N ratio of 20 dB or higher. The characteristic k2 indicates likelihood values of candidates (likelihood value of the first candidate) when the speakers 8 to 12 utter an unregistered phrase "stop" in a noise environment with an S/N ratio of 20 dB or higher. The characteristic m2 indicates likelihood values of candidates (likelihood value of the first candidate) when the speakers 15 to 19 utter the registered phrase "start" in a noise environment with an S/N ratio of 10 dB or lower.

The examples shown in FIGS. 13 to 16 can be also processed in the same manner as those examples shown in FIGS. 9 to 12 to reject the candidates for the unregistered phrase uttered by the speakers 8 to 12.

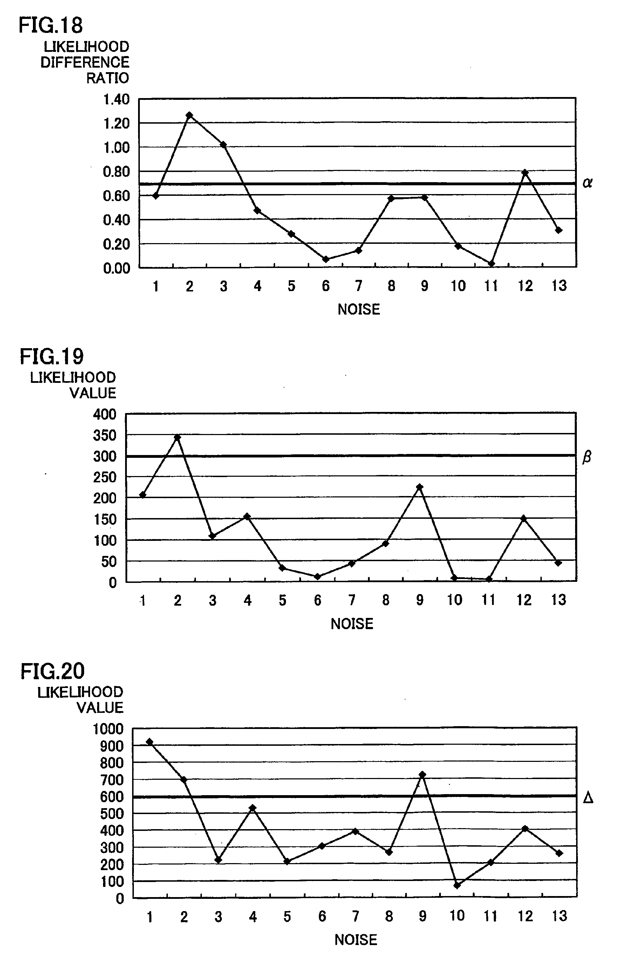

FIG. 17 illustrates distributions of evaluation results when various kinds of sounds, such as impact sound, except for languages, are input, the sounds being categorized into thirteen kinds of noise sequences. FIGS. 18 to 21 illustrate distributions of evaluation results when candidates for the noises, or the thirteen kinds of sounds, are evaluated with determination information $\alpha$, $\beta$, $\Delta$, $\gamma$ serving as thresholds. The candidates shown in FIGS. 18 to 21 need to be rejected because the candidates are selected for the noises, which are not included in registered phrases.

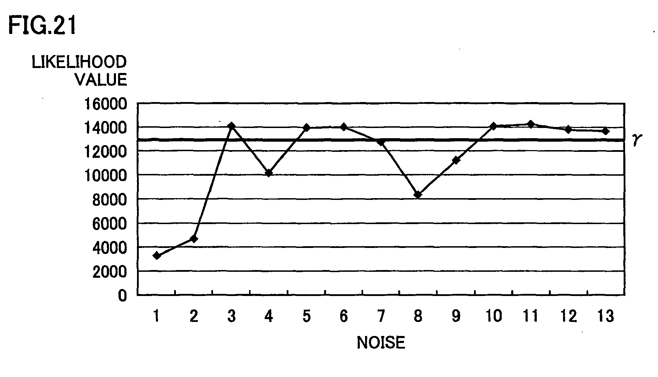

As shown in FIG. 18, when determination information $\alpha$ as a threshold is set to "0.7", the candidates for noises 1, 4 to 11 and 13, except for noises 2, 3 and 12, having likelihood values equal to or lower than the determination information $\alpha$ can be rejected. As shown in FIG. 19, when determination information $\beta$ as a threshold is set to "300", the candidates for noises, except for noise 2, having likelihood values equal to the determination information $\beta$ can be rejected. As shown in FIG. 20, when determination information $\Delta$ as a threshold is set to "600", the candidates for noises 3 to 8 and noises 10 to 13 having likelihood values equal to or lower than the determination information $\Delta$ can be rejected. As shown in FIG. 21, when determination information $\gamma$ as a threshold is set to "13000", the candidates for noises 1, 2, 4, 7 to 9 having likelihood values equal to or lower than the determination information $\gamma$ can be removed. Thus, evaluation with the determination information $\alpha$, $\beta$, $\Delta$, $\gamma$ as thresholds enables rejection of all candidates for the noises 1 to 13.

Although determination of whether to reject or adopt the first candidate is made by firstly calculating Expression 1 to determine the threshold $\alpha$, secondly calculating Expression 2 to determine the threshold $\beta$, thirdly calculating Expression 3 to determine the threshold $\Delta$, and finally calculating Expression 4 to determine the threshold $\gamma$ in this order in the above-described embodiment, the determination process is not limited thereto, and can begin with calculation of Expression 4 to determine the threshold $\gamma$. Any order of determination process is available.

As described in the embodiment, input speech is processed on a phrase-by-phrase basis so as to obtain likelihood-value distributions that are evaluated with the determination information α, β, Δ, γ, or thresholds, to reject candidates of registered phrases having a low likelihood value, to reject candidates of unregistered phrases and to reject noises other than languages, thereby improving the rejection rate.

In addition, the characteristics of the input speech can be grouped, for example, into men, women and children groups to perform group-by-group detailed evaluation, thereby enabling more accurate determination.

In addition, optimized determination information α, β, Δ, γ for each phrase stored in the storage unit 34 can improve the rejection rate of registered phrases having a low likelihood value and the rejection rate of unregistered phrases. The optimization is done by preparing, for example, data of one hundred sample phrases for a single phrase, inputting actual values to the determination information α, β, Δ, γ, and employing a value that increases the rejection rate as determination information, thereby improving the rejection rate.

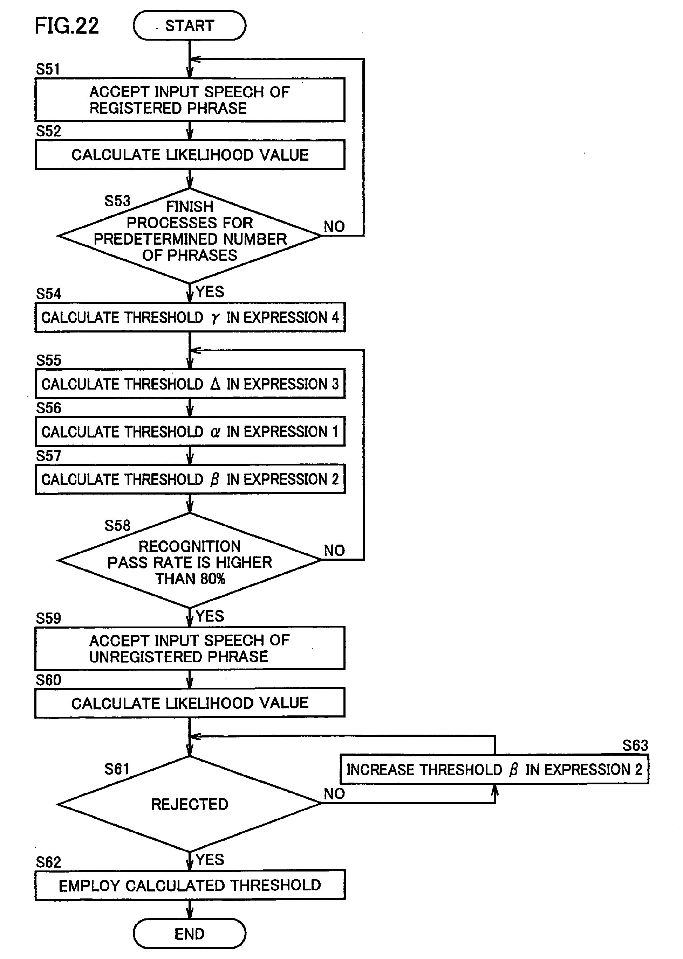

Specific description about setting the thresholds, or the determination information α, β, Δ, γ, for each phrase will be described. FIG. 22 is a flow chart illustrating how to set the thresholds, or the determination information α, β, Δ, γ, for each phrase. The description will now be made by referring to FIG. 22.

Firstly, input of speech corresponding to a registered phrase is accepted (S51). The speech of the registered phrase is superimposed with noise existing in an environment where the speech recognition system 1 is used or superimposed with white noise of 10 dB to produce a noise environment condition making users feel noisy. Then, as described above, an amount of speech characteristics is calculated and likelihood values are calculated based on the data stored in the storage unit 34 (S52).

Then, processing at S51 to S52 are repeatedly performed for the predetermined number of data phrases, for example, data of one hundred phrases as described above, prepared for every single registered phrase (NO at S53). Upon finishing the processes for the data of one hundred phrases (YES at S53), the threshold γ in Expression 4 is calculated (S54). The threshold γ in Expression 4 is calculated so that a recognition pass rate at determination becomes, for example, 99%. The recognition pass rate is a passing rate to measure correction of recognized speech and obtained by the following expression; the number of correctly recognized phrases that pass without being rejected + the number of correct speech recognitions x 100. More specifically, if 98 data phrases out of 100 data phrases are correctly recognized, the threshold γ is calculated so as to pass, but not reject 97 data phrases out of 98 data phrases. Moreover, the threshold γ in Expression 4 is calculated so as to be a predetermined value, for example, 10,000 or more.

Next, the threshold Δ in Expression 3 is calculated (S55). The threshold Δ in Expression 3 is calculated so that the recognition pass rate at determination becomes, for example, 90% in addition to the threshold γ in Expression 4 in S54. Specifically, if 98 data phrases out of 100 data phrases are correctly recognized, the threshold Δ is calculated so as to pass, but not reject 88 data phrases out of 98 data phrases. Moreover, the threshold Δ in Expression 3 is calculated so as to be a predetermined value, for example, 200 or more.

Then, the threshold α in Expression 1 is calculated (S56). The threshold α in Expression 1 is calculated so that the recognition pass rate at determination becomes, for example, 85% in addition to the threshold γ in Expression 4 at S54 and the threshold Δ in Expression 3 at S55. Specifically, if 98 data phrases out of 100 data phrases are correctly recognized, the threshold α is calculated so as to pass, but not reject 83 data phrases out of 98 data phrases. Moreover, the threshold α in Expression 1 is calculated so as to be a predetermined value, for example, 0.1 or more.

Then, threshold β in Expression 2 is calculated (S57). The threshold β in Expression 2 is calculated so that the recognition pass rate at determination becomes, for example, 80% in addition to the threshold γ in Expression 4 at S54, the threshold Δ in Expression 3 at S55 and the threshold α in Expression 1 at S56. Specifically, if 98 data phrases out of 100 data phrases are correctly recognized, the threshold β is calculated so as to pass, but not reject 78 data phrases out of the 98 data phrases. Moreover, the threshold β in Expression 2 is calculated so as to be a predetermined value, for example, 90 or more.

At S57, it is determined whether the recognition pass rate when determination is made with the threshold β in Expression 2 is higher than 80%. If the recognition pass rate is higher than 80% (YES at S58), input speech corresponding to the unregistered phrase is accepted (S59). The speech of the unregistered phrase is, as with the speech of the registered phrase, superimposed with noise existing in an environment where the speech recognition system 1 is used or superimposed with white noise (white noise) of 10 dB to produce a noise environment condition making users feel noisy. Then, the likelihood value is calculated (S60).

Then, it is determined whether the unregistered phrase is rejected with the thresholds γ, Δ, α, β calculated at S54 to S57. If the unregistered phrase is rejected (YES at S61), the calculated thresholds γ, Δ, α, β are employed as determination information (S62).

If, at S58, the recognition pass rate when determination is made with the threshold β in Expression 2 is 80% or lower (NO at S58), there is a high possibility that a phrase approximate to the accepted input registered phrase exists. After removing the approximate phrase, the threshold Δ in Expression 3, threshold α in Expression 1, and threshold β in Expression 2 are calculated again. This adjusts the recognition pass rate at determination to be higher than 80%.

At S61, if the unregistered phrase is not rejected (NO at S61), the threshold β in Expression 2 is increased (S63). Specifically, one is added to the threshold β in Expression 2. The threshold β is adjusted in this manner until rejecting the unregistered phrase.

Such a simple method for calculating the thresholds, or the determination information $\alpha$, $\beta$, $\Delta$, $\gamma$, can reduce time required processing. In addition, just adjusting the thresholds can readily perform adjustment of the rejection level.

For example, the rejection level is adjusted using a low rejection level threshold, a high rejection level threshold and a reference threshold calculated in the above. The low rejection level threshold is the lower limit of the thresholds calculated so that the recognition pass rates uniformly become, for example, 95%. The high rejection level threshold is the higher limit of the threshold $\alpha$ in Expression 1 calculated so that the recognition pass rates uniformly become, for example, 80% and the threshold $\beta$ in Expression 2 calculated so that the recognition pass rates become, for example, 70%.

Setting of the thresholds, or the determination information $\alpha$, $\beta$, $\Delta$, $\gamma$, to each phrase is made by calculating the threshold $\gamma$ in Expression 4, the threshold $\Delta$ in Expression 3, the threshold $\alpha$ in Expression 1 and the threshold $\beta$ in Expression 2 in this order. This calculation order can gradually narrow the range through which the phrase can pass.

Although the threshold $\beta$ in Expression 2 is controlled to be higher for the unregistered phrase that is not rejected at S61, this is just an example and the present invention is not limited to the example. The threshold $\alpha$ in Expression 1 can be controlled to be higher. In the case where a predetermined number of the non-rejected unregistered phrases, for example, two or less unregistered phrases exist, the threshold $\beta$ in Expression 2 may not need to be increased. According to the number of the non-rejected unregistered phrases, the threshold can be adjusted.

In addition, the thresholds, or the determination information $\alpha$, $\beta$, $\Delta$, $\gamma$, can be configured so as to be externally set to any values. This allows the rejection level in the speech recognition system 1 to be adjusted from the outside.

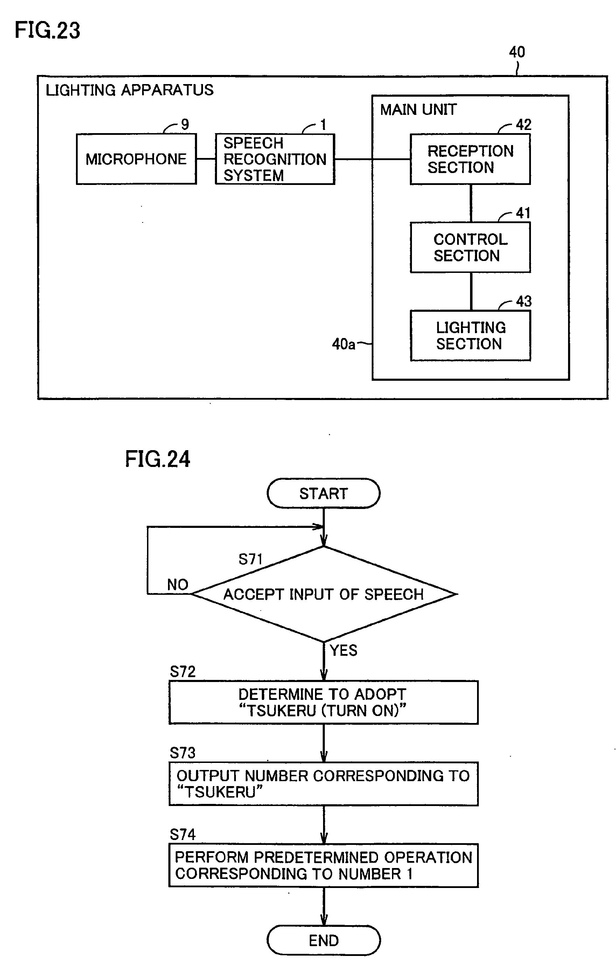

FIG. 23 is a block diagram of a lighting apparatus 40 used as the electronic apparatus 10 shown in FIG. 1. Referring to FIG. 23, the structure of the lighting apparatus 40 will be described. The lighting apparatus 40 includes a microphone 9, a speech recognition system 1 and a main unit 40a that is the principal unit of the lighting apparatus 40. The main unit 40a includes a control section (control unit) 41 that controls the entire main unit 40a, a reception section 42 that receives instructions from the speech recognition system 1, and a lighting section 43 that has a switch circuit, which controls a light bulb or the like between on and off states, and turns on and off the light bulb in response to an instruction from the reception section 42.

Upon receipt of an instruction from the reception section 42, the control section 41 performs operations according to the instruction. Specifically, the control section 41 receives a predetermined number from the reception section 42 and performs operations required by the number. The predetermined number is preset for every operation executable by the lighting apparatus 40. For example, the operation corresponding to number 1 is to turn on the light, while the operation corresponding to number 2 is to turn off the light. In other words, these operations are ON and OFF operations, such as light-up and light-out, set in binary. In addition, the operation corresponding to number 3 is to increase the brightness of the light by one level, and the operation corresponding to number 4 is to increase the brightness of the light by two levels. The operation corresponding to number 5 is to decrease the brightness of the light by one level, while the operation corresponding to number 6 is to decrease the brightness of the light by two levels. In other words, these operations are multi-step operations set by multiple values.

The speech recognition system 1 is externally attached to the main unit 40a and outputs to the reception section 42 a number corresponding to a phrase adopted from speech recognition candidates. In short, a number corresponding to an utterance is output.

More specifically, the phrases selected as speech recognition candidates are associated with predetermined numbers, and the speech recognition system 1 outputs the number of the adopted speech recognition candidate phrase. For example, the number corresponding to an utterance "Tsukeru (turn on the light)" is 1, while the number corresponding to an utterance "Kesu (turn off the light)" is 2. In addition, the number corresponding to an utterance "Akaruku ichi (brighter 1)" is 3. The number corresponding to an utterance "Akaruku ni (brighter 2)" is 4. The number corresponding to an utterance "Kuraku ichi (dimmer 1)" is 5. The number corresponding to an utterance "Kuraku ni (dimmer 2)" is 6.

A description will be made about the lighting apparatus 40 to be turned on. FIG. 24 is a flow chart showing the operations of the lighting apparatus 40 to turn the apparatus on. The description will now be made by referring to FIGS. 23 and 24.

At first, the speech recognition system 1 accepts an input of speech "Tsukeru" through a microphone 9 (S71). Then, the speech recognition system 1, as with the above descriptions, selects speech recognition candidates for the input speech "Tsukeru", and determines whether to reject or adopt the selected speech recognition candidates. In this description, adoption of "Tsukeru" is confirmed (S72).

Then, the speech recognition system 1 outputs a number corresponding to the utterance "Tsukeru" to the main unit 40a (S73). In this description, the number corresponding to "Tsukeru" is 1, and therefore, the speech recognition system 1 outputs number 1 to the main unit 40a.

Then, the control section 41 of the lighting apparatus 40 performs a predetermined operation corresponding to number 1 (S74). Since the operation corresponding to number 1 is to turn on the light in this description, the control section 41 controls the lighting section 43 to light up. For example, the control section 41 controls the lighting section 43 so as to bring the switch circuit into the ON state to transmit a voltage to the lighting section 43, thereby turning the lighting section 43 on.

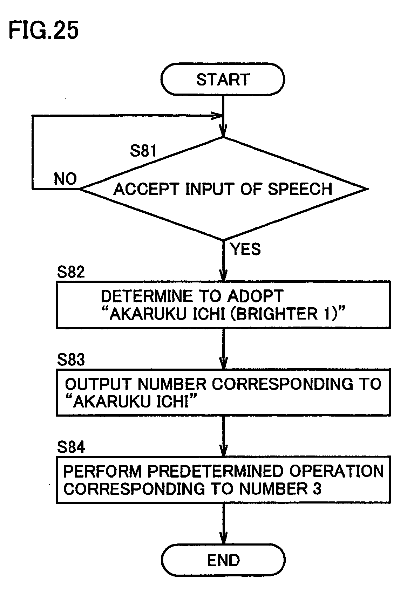

Subsequently, light modulation of the lighting apparatus 40 will be described. FIG. 25 is a flow chart showing the operations of lighting apparatus 40 to modulate the brightness. The description about light modulation of the lighting apparatus 40 will now be made by referring to FIGS. 23 and 25.

At first, the speech recognition system 1 accepts an input of speech "Akaruku ichi" through the microphone 9 (S81). Then, the speech recognition system 1 selects, as with the above description, speech recognition candidates for the input speech "Akaruku ichi", and determines whether to reject or adopt the selected speech recognition candidates. In this description, adoption of "Akaruku ichi" is confirmed (S82).

Then, the speech recognition system 1 outputs a number corresponding to the utterance "Akaruku ichi" (S83). In this description, the number corresponding to the utterance "Akaruku ichi" is 3, and therefore, the speech recognition system 1 outputs number 3 to the main unit 40a.

Then, the control section 41 of the lighting apparatus 40 performs a predetermined operation corresponding to number 3 (S84). Since the operation corresponding to number 3 is to increase the brightness of the light by one level in this description, the control section 41 increases the voltage transmitted to the lighting section 43 that in turn increases the brightness of the light by one level.

As described above, the electronic apparatus 10 controls itself to perform predetermined operations based on the speech recognized by the speech recognition system 1. Therefore, the electronic apparatus 10 is provided with a speech recognition system 1 with an improved recognition rate. As a result, the predetermined operations can be reliably performed based on the speech.

Although the electronic apparatus 10 is the lighting apparatus 40 in the above embodiment, the present invention is not limited thereto, but can be also applied to remote controllers for controlling televisions or other apparatuses.

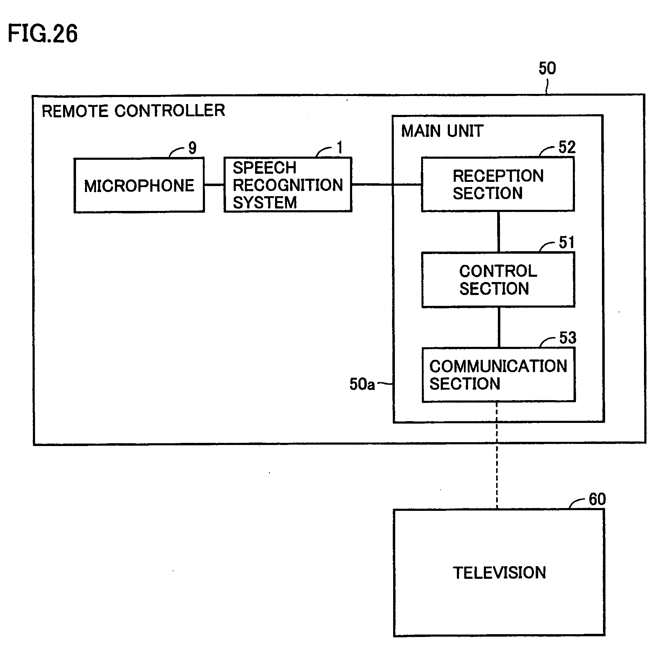

A description will be made about an application to a remote controller. FIG. 26 illustrates a remote controller 50 used as an electronic apparatus 10. Referring to FIG. 26, the remote controller 50 includes a microphone 9, a speech recognition system 1 and a main unit 50a that is a principal unit of the remote controller 50. The main unit 50a includes a control section 51 that controls the entire main unit 50a, a reception section 52 that receive instructions from the speech recognition system 1, and a communication section 53 that communicates with a television 60. The remote controller 50 controls the television 60 to turn on or off the power, to adjust volumes, to change the channels and so on via, for example, infrared communication with the television 60. More specifically, the main unit 50a receives a predetermined number from the reception section 52 and transmits an infrared data corresponding to the number to control the television 60. For example, the infrared data corresponding to number 1 is to turn on the television 60, the infrared data corresponding to number 10 is to change the channel of the television 60, and the infrared data corresponding to the number 20 is to turn up the volume of the television 60.

The speech recognition system 1, which is externally attached to the remote controller 50, outputs to the reception section 52 a number corresponding to an adopted speech recognition candidate phrase. For example, the number corresponding to an utterance "On" is 1, the number corresponding to an utterance "channeru ichi (channel 1)" is 10, and the number corresponding to an utterance "Oto wo ookiku (turn up the volume)" is 20.

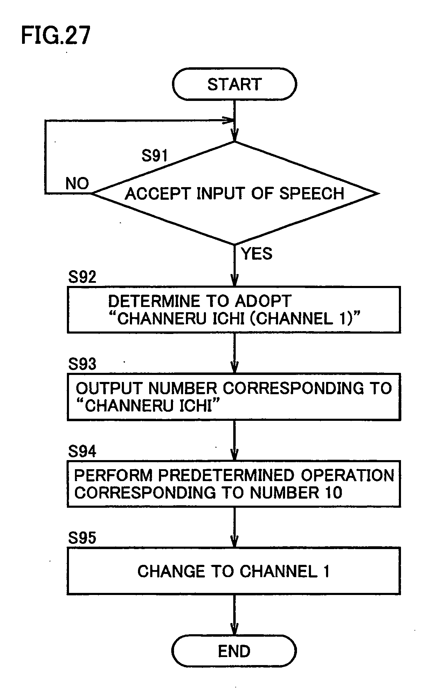

A description will now be made about changes in channel of the television 60. FIG. 27 is a flow chart illustrating the operations of the remote controller 50 and television 60 to change the channel of the television 60. The description will now be made by referring to FIGS. 26 and 27.

At first, the speech recognition system 1 accepts an input of speech "channeru ichi" through the microphone 9 (S91). Then, the speech recognition system 1 selects, as with the above description, speech recognition candidates for the input speech "channeru ichi" and determines whether to reject or adopt the selected speech recognition candidates. In this description, adoption of "channeru ichi" is confirmed (S92).

Then, the speech recognition system 1 outputs a number corresponding to the utterance "channeru ichi" to the main unit 50a (S93). In this description, the number corresponding to the utterance "channeru ichi" is 10, and therefore, the speech recognition system 1 outputs number 10 to the main unit 50a.

Subsequently, the control section 51 of the remote controller 50 performs a predetermined operation corresponding to number 10 (S94). Since the operation corresponding to number 10 is to change the channel of the television 60 in this description, the control section 51 performs infrared communication through the communication section 53 to change the channel of the television 60 to channel 1.

The television 60 that received communication from the remote controller 50 changes its channel to 1 (S95).

The electronic apparatus 10 can be not only those in the above-described embodiment, but also be, for example, a camera. In this case, depression of a shutter, alteration of shooting mode and other operations can be controlled by using the speech recognition system 1. The electronic apparatus 10 can be a telephone. In this case, making calls by inputting telephone numbers, registration to address books and other operations can be done by using the speech recognition system 1. The electronic apparatus 10 can be a clock. In this case, alarm setting, time adjustment and other operations can be done by using the speech recognition system 1. Furthermore, the electronic apparatus 10 can be a toy controller, refrigerator, washing machine, air conditioner, electric fan, computer, digital complex machine, radio, audio system, cooking appliance, and any other electronic apparatuses.

Although the speech recognition system 1 in the above-describe embodiments is externally attached to the main unit 10a, which is the principal unit of the electronic apparatus 10, the present invention is not limited thereto and the speech recognition system 1 can be built in the main unit 10a.

Although the speech recognition system 1 in the above-describe embodiment recognizes the Japanese language, the present invention is not limited thereto and any languages including English, Chinese and Korean can be recognized.

The foregoing has described the embodiment of the present invention by referring to the drawings. However, the invention should not be limited to the illustrated embodiment. It should be appreciated that various modifications and changes can be made to the illustrated embodiment within the scope of the appended claims.

Industrial Applicability

The present invention is effectively used in a speech recognition system, which recognizes input speech on a registered phrase-by-phrase basis and rejects recognition candidates having low likelihood values, the method for recognizing speech, and the electronic apparatus including the speech recognition system.

Reference Signs List

1 speech recognition system, 2 noise segment detection device, 3 robust speech recognition device, 4 recognition filtering device, 9 microphone, 10 electronic apparatus, 21 speech power calculation circuit, 22 speech segment detection circuit, 31 speech characteristic-amount calculation circuit, 32 noise robust processing circuit, 33 estimation process likelihood calculation circuit, 34 storage unit, 35 data, 36 men's registered phrase data group, 37 women's registered phrase data group, 38 children's registered phrase data group, 40 lighting apparatus, 10a, 40a, 50a main unit, 41, 51 control section, 42, 52 reception section, 43 lighting section, 50 remote controller, 53 communication section, 60 television.

**Claims**

1. A speech recognition system for recognizing speech uttered in a noise environment on a registered phrase-by-phrase basis, the speech recognition system comprising :

   a speech characteristic-amount calculation unit for calculating an amount of speech characteristics of each phrase in the uttered speech;
   a phrase storage unit for storing speech pattern sequence information of phrases;
   a likelihood value calculation unit for calculating likelihood values of a plurality of speech recognition candidates by comparing the amount of speech characteristics of a phrase calculated by the speech characteristic-amount calculation unit with the speech pattern sequence information of a plurality of the phrases stored in the phrase storage unit;
   a candidate extraction unit that, based on the likelihood values calculated by the likelihood value calculation unit, is adapted for selecting, in decreasing order of the likelihood values, a first speech recognition candidate, a second speech recognition candidate ranked lower than the first speech recognition candidate, and a third speech recognition candidate ranked lower than the second speech recognition candidate; and
   a recognition filtering unit for determining whether to reject or not reject the speech recognition candidates extracted by the candidate extraction unit based on the likelihood difference ratio between the difference in likelihood values between the first speech recognition candidate and the second speech recognition candidate and the difference in likelihood values between the second speech recognition candidate and the third speech recognition candidate; wherein
   approximate phrases are prepared for every registered phrase in advance and when a speech recognition candidate that has speech pattern sequence information approximate to that of the first speech recognition candidate exists in the speech recognition candidates ranked lower than the first speech recognition candidate, the candidate extraction unit removes the speech recognition candidate and extracts a speech recognition candidate ranked lower than the speech recognition candidate.

2. The speech recognition system according to claim 1, wherein
   the recognition filtering unit rejects the first speech recognition candidate when the likelihood difference ratio is lower than a predetermined value, while regarding the first speech recognition candidate as a target to be subjected to speech recognition when the likelihood difference ratio is higher than the predetermined value.

3. The speech recognition system according to claim 1, wherein
the phrase storage unit stores the speech pattern sequence information categorized into groups according to speech characteristics, and
the recognition filtering unit includes a first determination unit that determines whether to reject or not reject the extracted first speech recognition candidate based on the likelihood difference ratios of the groups categorized according to the speech characteristics.

4. The speech recognition system according to claim 1, wherein
the recognition filtering unit includes a second determination unit that determines whether to reject or not reject the extracted first speech recognition candidate based on the likelihood value of the first speech recognition candidate and the likelihood value of the second speech recognition candidate.

5. The speech recognition system according to claim 1, wherein
the likelihood value calculation unit extracts a fourth speech recognition candidate that is ranked lower than the third speech recognition candidate, and
the recognition filtering unit includes a third determination unit that determines whether to reject or not reject the extracted first speech recognition candidate based on the difference between the likelihood value of the first speech recognition candidate and the likelihood value of the fourth speech recognition candidate.

6. The speech recognition system according to claim 1, wherein
the recognition filtering unit includes a fourth determination unit that determines whether to reject or not reject the extracted first speech recognition candidate based on the likelihood value of the first speech recognition candidate.

7. A method for recognizing speech uttered in a noise environment on a registered phrase-by-phrase basis, the method comprising the steps of:

calculating an amount of speech characteristics of each phrase in the uttered speech; calculating likelihood values of a plurality of speech recognition candidates treated as targets to be subject to speech recognition by comparing the amount of speech characteristics calculated for a phrase with speech pattern sequence information of a plurality of phrases stored in advance;
selecting a first speech recognition candidate, a second speech recognition candidate ranked lower than the first speech recognition candidate, and a third speech recognition candidate ranked lower than the second speech recognition candidate in decreasing order of the likelihood values based on the likelihood values calculated for each phrase;
comparing a likelihood difference ratio between the difference in likelihood values between the selected first speech recognition candidate and the selected second speech recognition candidate and the difference in likelihood values between the selected second speech recognition candidate and the selected third speech recognition candidate; and
determining, when the likelihood difference ratio is lower than a predetermined value, to reject the first speech recognition candidate, and when the likelihood difference ratio is higher than the predetermined value, to regard the first speech recognition candidate as a target to be subjected to speech recognition;wherein
approximate phrases are prepared for every registered phrase in advance and when a speech recognition candidate that has speech pattern sequence information approximate to that of the first speech recognition candidate exists in the speech recognition candidates ranked lower than the first speech recognition candidate, the candidate extraction unit removes the speech recognition candidate and extracts a speech recognition candidate ranked lower than the speech recognition candidate.

8. An electronic apparatus comprising a speech recognition system according to claim 1 that recognizes speech uttered in a noise environment on a registered phrase-by-phrase basis, wherein
the electronic apparatus comprises a control unit that controls the electronic apparatus to perform a predetermined operation based on the speech recognized by the speech recognition system.

9. The electronic apparatus according to claim 8, wherein
the likelihood value calculation unit calculates likelihood values of a plurality of speech recognition candidates,
the candidate extraction unit selects a first speech recognition candidate, a second speech recognition candidate ranked lower than the first speech recognition candidate, and a third speech recognition candidate ranked lower than the second speech recognition candidate in decreasing order of the likelihood values based on the likelihood values calculated by the likelihood value calculation unit, and

the recognition filtering unit determines whether to reject or not reject the speech recognition candidates extracted by the candidate extraction unit based on the likelihood difference ratio between the difference in likelihood values between the first speech recognition candidate and the second speech recognition candidate and the difference in likelihood values between the second speech recognition candidate and the third speech recognition candidate.

**10.** The electronic apparatus according to claim 8, wherein
the speech recognized by the speech recognition system is associated with a predetermined number, and the predetermined number corresponds to an operation performed by the electronic apparatus.

**11.** The electronic apparatus according to claim 10, wherein the operation is set in binary.

**12.** The electronic apparatus according to claim 10, wherein the operation is set by multiple values.

### Patentansprüche

**1.** Spracherkennungssystem zum Erkennen von Sprache, die in einer Störumgebung eingebettet ist, und zwar auf einer registrierten Phrasen-zu-Phrasen-Basis, wobei das Spracherkennungssystem Folgendes aufweist:

eine Sprachcharakteristikgrößenberechnungseinheit zum Berechnen einer Größe von Sprachcharakteristika von jeder Phrase in der eingebetteten Sprache;
eine Phrasenspeichereinheit zum Speichern von Sprachmustersequenzinformationen von Phrasen;
eine Wahrscheinlichkeitswertberechnungseinheit zum Berechnen von Wahrscheinlichkeitswerten von vielen Spracherkennungskandidaten, indem die Größe der Sprachcharakteristika einer Phrase, die durch die Sprachcharakteristikgrößenberechnungseinheit berechnet wird, mit den Sprachmustersequenzinformationen von vielen der Phrasen verglichen wird, die in der Phrasenspeichereinheit gespeichert sind;
eine Kandidatenextraktionseinheit, die auf der Grundlage der Wahrscheinlichkeitswerte, die durch die Wahrscheinlichkeitswertberechnungseinheit berechnet werden, daran angepasst ist, in absteigender Reihenfolge der Wahrscheinlichkeitswerte einen ersten Spracherkennungskandidaten, einen zweiten Spracherkennungskandidaten, der einen niedrigeren Rang hat als der erste Spracherkennungskandidat, und einen dritten Spracherkennungskandidaten auszuwählen, der einen niedrigeren Rang als der zweite Spracherkennungskandidat hat; und
eine Erkennungsfiltereinheit zum Bestimmen, ob die Spracherkennungskandidaten zurückzuweisen sind oder nicht, die durch die Kandidatenextraktionseinheit extrahiert werden, und zwar auf der Grundlage des Wahrscheinlichkeitsdifferenzverhältnisses zwischen der Differenz der Wahrscheinlichkeitswerte zwischen dem ersten Spracherkennungskandidaten und dem zweiten Spracherkennungskandidaten und der Differenz der Wahrscheinlichkeitswerte zwischen dem zweiten Spracherkennungskandidaten und dem dritten Spracherkennungskandidaten ; wobei
ähnliche Phrasen für jede registrierte Phrase im Voraus vorbereitet werden, und wenn ein Spracherkennungskandidat, der Sprachmustersequenzinformationen hat, die ähnlich jenen des ersten Spracherkennungskandidaten sind, in den Spracherkennungskandidaten vorhanden ist, die einen niedrigeren Rang haben als der erste Spracherkennungskandidat, dann beseitigt die Kandidatenextraktionseinheit den Spracherkennungskandidaten und extrahiert einen Spracherkennungskandidaten, der einen niedrigeren Rang hat als der Spracherkennungskandidat.

**2.** Spracherkennungssystem gemäß Anspruch 1, wobei
die Erkennungsfiltereinheit den ersten Spracherkennungskandidaten zurückweist, wenn das Wahrscheinlichkeitsdifferenzverhältnis kleiner ist als ein vorbestimmter Wert, während der erste Spracherkennungskandidat als ein Ziel betrachtet wird, das der Spracherkennung auszusetzen ist, wenn das Wahrscheinlichkeitsdifferenzverhältnis größer ist als der vorbestimmte Wert.

**3.** Spracherkennungssystem gemäß Anspruch 1, wobei
die Phrasenspeichereinheit die Sprachmustersequenzinformationen speichert, die in Gruppen gemäß Sprachcharakteristika kategorisiert werden, und
die Erkennungsfiltereinheit eine erste Bestimmungseinheit aufweist, die bestimmt, ob der extrahierte erste Spracherkennungskandidat zurückzuweisen ist oder nicht, und zwar auf der Grundlage der Wahrscheinlichkeitsdifferenzverhältnisse der Gruppen, die gemäß den Sprachcharakteristika kategorisiert sind.

4. Spracherkennungssystem gemäß Anspruch 1, wobei
die Erkennungsfiltereinheit eine zweite Bestimmungseinheit aufweist, die bestimmt, ob der extrahierte erste Spracherkennungskandidat zurückzuweisen ist oder nicht, und zwar auf der Grundlage des Wahrscheinlichkeitswerts des ersten Spracherkennungskandidaten und des Wahrscheinlichkeitswerts des zweiten Spracherkennungskandidaten.

5. Spracherkennungssystem gemäß Anspruch 1, wobei
die Wahrscheinlichkeitswertberechnungseinheit einen vierten Spracherkennungskandidaten extrahiert, der einen niedrigeren Rang hat als der dritte Spracherkennungskandidat, und
die Erkennungsfiltereinheit eine dritte Bestimmungseinheit aufweist, die bestimmt, ob der extrahierte erste Spracherkennungskandidat zurückzuweisen ist oder nicht, und zwar auf der Grundlage der Differenz zwischen dem Wahrscheinlichkeitswert des ersten Spracherkennungskandidaten und dem Wahrscheinlichkeitswert des vierten Spracherkennungskandidaten.

6. Spracherkennungssystem gemäß Anspruch 1, wobei
die Erkennungsfiltereinheit eine vierte Bestimmungseinheit aufweist, die bestimmt, ob der extrahierte erste Spracherkennungskandidat zurückzuweisen ist oder nicht, und zwar auf der Grundlage des Wahrscheinlichkeitswerts des ersten Spracherkennungskandidaten.

7. Verfahren zum Erkennen von Sprache, die in einer Störumgebung eingebettet ist, und zwar auf einer registrierten Phrasen-zu-Phrasen-Basis, wobei das Verfahren die folgenden Schritte aufweist:

Berechnen einer Größe von Sprachcharakteristika von jeder Phrase in der eingebetteten Sprache;
Berechnen von Wahrscheinlichkeitswerten von vielen Spracherkennungskandidaten, die als Ziele zu behandeln sind, die einer Spracherkennung auszusetzen sind, indem die Größe der Sprachcharakteristika, die für eine Phrase berechnet werden, mit Sprachmustersequenzinformationen von vielen Phrasen verglichen wird, die im Voraus gespeichert werden;
Auswählen eines ersten Spracherkennungskandidaten, eines zweiten Spracherkennungskandidaten, der einen niedrigeren Rang hat als der erste Spracherkennungskandidat, und eines dritten Spracherkennungskandidaten, der einen niedrigeren Rang hat als der zweite Spracherkennungskandidat, und zwar in einer absteigenden Reihenfolge der Wahrscheinlichkeitswerte auf der Grundlage der Wahrscheinlichkeitswerte, die für jede Phrase berechnet werden;
Vergleichen eines Wahrscheinlichkeitsdifferenzverhältnisses zwischen der Differenz der Wahrscheinlichkeitswerte zwischen dem ausgewählten ersten Spracherkennungskandidaten und dem ausgewählten zweiten Spracherkennungskandidaten und der Differenz der Wahrscheinlichkeitswerte zwischen dem ausgewählten zweiten Spracherkennungskandidaten und dem ausgewählten dritten Spracherkennungskandidaten; und
Bestimmen, wann das Wahrscheinlichkeitsdifferenzverhältnis kleiner ist als ein vorbestimmter Wert, um den ersten Spracherkennungskandidaten zurückzuweisen, und wann das Wahrscheinlichkeitsdifferenzverhältnis größer ist als der vorbestimmte Wert, um den ersten Spracherkennungskandidaten als ein Ziel zu betrachten, das der Spracherkennung auszusetzen ist; wobei
ähnliche Phrasen für jede registrierte Phrase im Voraus vorbereitet werden, und wenn ein Spracherkennungskandidat, der Sprachmustersequenzinformationen hat, die ähnlich jenen des ersten Spracherkennungskandidaten sind, in den Spracherkennungskandidaten vorhanden ist, die einen niedrigeren Rang haben als der erste Spracherkennungskandidat, beseitigt die Kandidatenextraktionseinheit den Spracherkennungskandidaten und extrahiert einen Spracherkennungskandidaten, der einen niedrigeren Rang hat als der Spracherkennungskandidat.

8. Elektronisches Gerät mit einem Spracherkennungssystem gemäß Anspruch 1, das Sprache erkennt, die in einer Störumgebung eingebettet ist, und zwar auf einer registrierten Phrasen-zu-Phrasen-Basis, wobei
das elektronische Gerät eine Steuereinheit aufweist, die das elektronische Gerät zum Durchführen eines vorbestimmten Betriebs auf der Grundlage der Spracherkennung durch das Spracherkennungssystem steuert.

9. Elektronisches Gerät gemäß Anspruch 8, wobei
die Wahrscheinlichkeitswertberechnungseinheit Wahrscheinlichkeitswerte von vielen Spracherkennungskandidaten berechnet,
die Kandidatenextraktionseinheit einen ersten Spracherkennungskandidaten, einen zweiten Spracherkennungskandidaten, der einen niedrigeren Rang hat als der erste Spracherkennungskandidat, und einen dritten Spracherkennungskandidaten auswählt, der einen niedrigeren Rang hat als der zweite Spracherkennungskandidat, und zwar in absteigender Reihenfolge der Wahrscheinlichkeitswerte auf der Grundlage der Wahrscheinlichkeitswerte, die durch die Wahrscheinlichkeitswertberechnungseinheit berechnet werden, und

die Erkennungsfiltereinheit bestimmt, ob die Spracherkennungskandidaten zurückzuweisen sind oder nicht, die durch die Kandidatenextraktionseinheit extrahiert werden, und zwar auf der Grundlage des Wahrscheinlichkeitsdifferenzverhältnisses zwischen der Differenz der Wahrscheinlichkeitswerte zwischen dem ersten Spracherkennungskandidaten und dem zweiten Spracherkennungskandidaten, und der Differenz der Wahrscheinlichkeitswerte zwischen dem zweiten Spracherkennungskandidaten und dem dritten Spracherkennungskandidaten.

10. Elektronisches Gerät gemäß Anspruch 8, wobei
die Sprache, die durch das Spracherkennungssystem erkannt wird, mit einer vorbestimmten Zahl verknüpft ist, und
die vorbestimmte Zahl einem Betrieb entspricht, der durch das elektronische Gerät durchgeführt wird.

11. Elektronisches Gerät gemäß Anspruch 10, wobei der Betrieb binär festgelegt ist.

12. Elektronisches Gerät gemäß Anspruch 10, wobei der Betrieb durch mehrere Werte festgelegt ist.


**Revendications**

1. Système de reconnaissance vocale permettant de reconnaître, phrase par phrase enregistrées, une parole prononcée dans un environnement acoustique, le système de reconnaissance vocale comprenant:

   une unité de calcul de grandeur de caractéristiques vocales destinée à calculer une grandeur de caractéristiques vocales de chaque phrase dans la parole prononcée ;
   une unité de stockage de phrases destinée à stocker des informations de séquence de modèles de voix de phrases ;
   une unité de calcul de valeurs de vraisemblance destinée à calculer des valeurs de vraisemblance d'une pluralité de candidats de reconnaissance vocale en comparant la grandeur de caractéristiques vocales d'une phrase calculée par l'unité de calcul de grandeur de caractéristiques vocales avec les informations de séquence de modèles de voix d'une pluralité de phrases stockées dans l'unité de stockage de phrases ;
   une unité d'extraction de candidats qui, sur la base des valeurs de vraisemblance calculées par l'unité de calcul de valeurs de vraisemblance, est adaptée pour sélectionner, dans l'ordre décroissant des valeurs de vraisemblance, un premier candidat de reconnaissance vocale, un deuxième candidat de reconnaissance vocale classé au dessous du premier candidat de reconnaissance vocale, et un troisième candidat de reconnaissance vocale classé au dessous du deuxième candidat de reconnaissance vocale ; et
   une unité de filtrage de reconnaissance destinée à déterminer s'il convient de rejeter les candidats de reconnaissance vocale extraits par l'unité d'extraction de candidats ou non sur la base du rapport de différence de vraisemblance entre la différence de valeurs de vraisemblance entre le premier candidat de reconnaissance vocale et le deuxième candidat de reconnaissance vocale et la différence des valeurs de vraisemblance entre le deuxième candidat de reconnaissance vocale et le troisième candidat de reconnaissance vocale ; où
   des phrases approximatives sont préparées pour chaque phrase enregistrée à l'avance et lorsqu'un candidat de reconnaissance vocale qui a des informations de séquence de modèles de voix proches de celles du premier candidat de reconnaissance vocale existe dans les candidats de reconnaissance vocale classés au dessous du premier candidat de reconnaissance vocale, l'unité d'extraction de candidats élimine le candidat de reconnaissance vocale et extrait un candidat de reconnaissance vocale classé au dessous du candidat de reconnaissance vocale.

2. Système de reconnaissance vocale selon la revendication 1, dans lequel
   l'unité de filtrage de reconnaissance rejette le premier candidat de reconnaissance vocale lorsque le rapport de différence de vraisemblance est inférieur à une valeur prédéterminée, tout en considérant le premier candidat de reconnaissance vocale comme étant une cible à soumettre à la reconnaissance vocale lorsque le rapport de différence de vraisemblance est supérieur à la valeur prédéterminée.

3. Système de reconnaissance vocale selon la revendication 1, dans lequel
   l'unité de stockage de phrases stocke les informations de séquence de modèles de voix regroupées en fonction des caractéristiques vocales, et
   l'unité de filtrage de reconnaissance comporte une première unité de détermination qui détermine s'il convient de rejeter le premier candidat de reconnaissance vocale extrait ou non sur la base des rapports de différence de vraisemblance des groupes classés selon les caractéristiques vocales.

4. Système de reconnaissance vocale selon la revendication 1, dans lequel l'unité de filtrage de reconnaissance comporte une deuxième unité de détermination qui détermine s'il convient de rejeter le premier candidat de reconnaissance vocale extrait ou non sur la base de la valeur de vraisemblance du premier candidat de reconnaissance vocale et de la valeur de vraisemblance du deuxième candidat de reconnaissance vocale.

5. Système de reconnaissance vocale selon la revendication 1, dans lequel l'unité de calcul de valeurs de vraisemblance extrait un quatrième candidat de reconnaissance vocale qui est classé au dessous du troisième candidat de reconnaissance vocale, et l'unité de filtrage de reconnaissance comporte une troisième unité de détermination qui détermine s'il convient de rejeter le premier candidat de reconnaissance vocale extrait ou non sur la base de la différence entre la valeur de vraisemblance du premier candidat de reconnaissance vocale et la valeur de vraisemblance du quatrième candidat de reconnaissance vocale.

6. Système de reconnaissance vocale selon la revendication 1, dans lequel l'unité de filtrage de reconnaissance comporte une unité de détermination qui détermine s'il convient de rejeter le premier candidat de reconnaissance vocale extrait sur la base de la valeur de vraisemblance du premier candidat de reconnaissance vocale.

7. Procédé permettant de reconnaître, phrase par phrase enregistrées, une parole prononcée dans un environnement, le procédé comprenant les étapes qui consistent :

à calculer une grandeur de caractéristiques vocales de chaque phrase dans la parole prononcée ;
à calculer des valeurs de vraisemblance d'une pluralité de candidats de reconnaissance vocale traités comme étant des cibles à soumettre à la reconnaissance vocale en comparant la grandeur de caractéristiques vocales calculées pour une phrase avec des informations de séquence de modèles de voix d'une pluralité de phrases stockées à l'avance ;
à sélectionner un premier candidat de reconnaissance, vocale, un deuxième candidat de reconnaissance vocale classé au dessous du premier candidat de reconnaissance vocale, et un troisième candidat de reconnaissance vocale classé au dessous du deuxième candidat de reconnaissance vocale dans un ordre décroissant des valeurs de vraisemblance sur la base des valeurs de vraisemblance calculées pour chaque phrase ;
à comparer un rapport de différence de vraisemblance entre la différence des valeurs de vraisemblance entre le premier candidat de reconnaissance vocale sélectionné et le deuxième candidat de reconnaissance vocale sélectionné et la différence des valeurs de vraisemblance entre le deuxième candidat de reconnaissance vocale sélectionné et le troisième candidat de reconnaissance vocale sélectionné ; et
à déterminer, lorsque le rapport de différence de vraisemblance est inférieur à une valeur prédéterminée, qu'il convient de rejeter le premier candidat de reconnaissance vocale, et lorsque le rapport de différence de vraisemblance est supérieur à la valeur prédéterminée, à déterminer qu'il convient de considérer le premier candidat de reconnaissance vocale comme étant une cible à soumettre à la reconnaissance vocale ; où des phrases approximatives sont préparées pour chaque phrase enregistrée à l'avance et lorsqu'un candidat de reconnaissance vocale qui a des informations de séquence de modèles de voix proches de celles du premier candidat de reconnaissance vocale existe dans les candidats de reconnaissance vocale classés au dessous du premier candidat de reconnaissance vocale, l'unité d'extraction de candidats élimine le candidat de reconnaissance vocale et extrait un candidat de reconnaissance vocale classé au dessous du candidat de reconnaissance vocale.

8. Appareil électronique comprenant un système de reconnaissance vocale selon la revendication 1 qui reconnaît, phrase par phrase enregistrées, une parole prononcée dans un environnement sonore, dans lequel l'appareil électronique comprend une unité de commande qui commande l'appareil électronique pour exécuter une opération prédéterminée selon la voix reconnue par le système de reconnaissance vocale.

9. Appareil électronique selon la revendication 8, dans lequel l'unité de calcul de valeurs de vraisemblance calcule des valeurs de vraisemblance d'une pluralité de candidats de reconnaissance vocale, l'unité d'extraction de candidats sélectionne un premier candidat de reconnaissance vocale, un deuxième candidat de reconnaissance vocale classé au dessous du premier candidat de reconnaissance vocale, et un troisième candidat de reconnaissance vocale classé au dessous du deuxième candidat de reconnaissance vocale dans l'ordre décroissant des valeurs de vraisemblance selon les valeurs de vraisemblance calculées par l'unité de calcul de valeurs de vraisemblance, et

l'unité de filtrage de reconnaissance détermine s'il convient de rejeter les candidats de reconnaissance vocale extraits par l'unité d'extraction de candidats ou non selon la différence du rapport de vraisemblance entre la différence des valeurs de vraisemblance entre le premier candidat de reconnaissance vocale et le deuxième candidat de reconnaissance vocale et la différence des valeurs de vraisemblance entre le deuxième candidat de reconnaissance vocale et le troisième candidat de reconnaissance vocale.

10. Appareil électronique selon la revendication 8, dans lequel
la voix reconnue par le système de reconnaissance vocale est associée à un nombre prédéterminé, et le nombre prédéterminé correspond à une opération exécutée par l'appareil électronique.

11. Appareil électronique selon la revendication 10, dans lequel
l'opération est définie en mode binaire.

12. Appareil électronique selon la revendication 10, dans lequel
l'opération est définie par des valeurs multiples.

# FIG.1

10

ELECTRONIC APPARATUS

| 9 | 1 | 10a |
|---|---|-----|
| MICROPHONE | SPEECH RECOGNITION SYSTEM | MAIN UNIT |

**FIG.2**

## FIG.3

LIKELIHOOD
VALUE

RANKING

SPEAKER 1
SPEAKER 2
SPEAKER 3
SPEAKER 4
SPEAKER 5

## FIG.4

LIKELIHOOD
VALUE

RANKING

SPEAKER 8
SPEAKER 9
SPEAKER 10
SPEAKER 11
SPEAKER 12

# FIG.5

```
                    RECOGNITION FILTERING

                              │
                              ▼         ┌ SP1
                    ◇─────────────────────◇
          ┌─────────────  GROUPING  ──────────────┐
          │               ◇─────────◇             │
          │                    │                  │
        MEN                  WOMEN             CHILDREN
          │        ┌ SP2       │      ┌ SP6       │       ┌ SP10
          ▼                    ▼                  ▼
    ┌──────────────┐   ┌──────────────┐   ┌──────────────┐
    │ REGISTERED-  │   │ REGISTERED-  │   │ REGISTERED-  │
    │ PHRASE       │   │ PHRASE       │   │ PHRASE       │
    │ REJECTION    │   │ REJECTION    │   │ REJECTION    │
    │ EVALUATION   │   │ EVALUATION   │   │ EVALUATION   │
    └──────────────┘   └──────────────┘   └──────────────┘
          │     ┌ SP3        │     ┌ SP7        │     ┌ SP11
          ▼                  ▼                  ▼
     ◇──────────◇ NO    ◇──────────◇ NO    ◇──────────◇ NO
     DETERMINATION      DETERMINATION      DETERMINATION
          │                  │                  │
        YES ┌ SP4          YES ┌ SP8          YES ┌ SP12
          ▼                  ▼                  ▼
    ┌──────────────┐   ┌──────────────┐   ┌──────────────┐
    │ UNREGISTERED-│   │ UNREGISTERED-│   │ UNREGISTERED-│
    │ PHRASE       │   │ PHRASE       │   │ PHRASE       │
    │ REJECTION    │   │ REJECTION    │   │ REJECTION    │
    │ EVALUATION   │   │ EVALUATION   │   │ EVALUATION   │
    └──────────────┘   └──────────────┘   └──────────────┘
          │     ┌ SP5        │     ┌ SP9        │     ┌ SP13
          ▼                  ▼                  ▼
     ◇──────────◇ NO    ◇──────────◇ NO    ◇──────────◇ NO
     DETERMINATION      DETERMINATION      DETERMINATION
          │                  │                  │
        YES               YES                YES
                              │   ┌ SP14
                              ▼
                    ┌──────────────────┐
                    │ GROUP EVALUATION │
                    └──────────────────┘
                              │
                              ▼
                            END
```

# FIG.6

REGISTERED-PHRASE REJECTION EVALUATION

SP21

$$\frac{(\text{LIKELIHOOD VALUE OF FIRST CANDIDATE}-\text{LIKELIHOOD VALUE OF SECOND CANDIDATE})}{(\text{LIKELIHOOD VALUE OF SECOND CANDIDATE}-\text{LIKELIHOOD VALUE OF MTH CANDIDATE})} > \alpha i \text{ (FIRST CANDIDATE)}$$

SP22

DETERMINATION — NO

YES

SP23

$(\text{LIKELIHOOD VALUE OF FIRST CANDIDATE}-\text{LIKELIHOOD VALUE OF SECOND CANDIDATE}) > \beta i \text{ (FIRST CANDIDATE)}$

SP24

DETERMINATION — NO

YES

SP25

$(\text{LIKELIHOOD VALUE OF FIRST CANDIDATE}-\text{LIKELIHOOD VALUE OF NTH CANDIDATE}) > \Delta i \text{ (FIRST CANDIDATE)}$

SP26

DETERMINATION — NO

YES

SP27

LIKELIHOOD VALUE OF FIRST CANDIDATE $> \gamma i$ (FIRST CANDIDATE)

SP28

DETERMINATION — NO

YES

RETURN

# FIG.7

UNREGISTERED-PHRASE REJECTION EVALUATION

SP31

$$\frac{\text{(LIKELIHOOD VALUE OF FIRST CANDIDATE-LIKELIHOOD VALUE OF SECOND CANDIDATE)}}{\text{(LIKELIHOOD VALUE OF SECOND CANDIDATE-LIKELIHOOD VALUE OF MTH CANDIDATE)}} > \alpha_0 \text{ (FIRST CANDIDATE)}$$

SP32

DETERMINATION → NO

↓ YES

SP33

(LIKELIHOOD VALUE OF FIRST CANDIDATE-LIKELIHOOD VALUE OF SECOND CANDIDATE) $> \beta_0$ (FIRST CANDIDATE)

SP34

DETERMINATION → NO

↓ YES

SP35

(LIKELIHOOD VALUE OF FIRST CANDIDATE-LIKELIHOOD VALUE OF NTH CANDIDATE) $> \Delta_0$ (FIRST CANDIDATE)

SP36

DETERMINATION → NO

↓ YES

SP37

LIKELIHOOD VALUE OF FIRST CANDIDATE $> \gamma_0$ (FIRST CANDIDATE)

SP38

DETERMINATION → NO

↓ YES

RETURN

FIG.8

```
                  ┌──────────────────────┐
                  │   GROUP EVALUATION   │
                  └──────────────────────┘
                              │
                              ▼                           ┌─SP41
  ┌──────────────────────────────────────────────────────────────────┐
  │ LIKELIHOOD VALUE OF MEN'S FIRST CANDIDATE × K1≧                   │
  │ LIKELIHOOD VALUE OF WOMEN'S FIRST CANDIDATE × K2 OR              │
  │ (LIKELIHOOD VALUE OF CHILDREN'S FIRST CANDIDATE × K3)            │
  └──────────────────────────────────────────────────────────────────┘
                              │
                              ▼       ┌─SP42
                         ╱─────────────╲          YES
                        ╱ DETERMINATION  ╲──────────────────┐
                         ╲───────────────╱                  │
                              │ NO                           ▼        ┌─SP43
                              │                   ┌────────────────────────────┐
                              │                   │  ADOPT MEN'S FIRST CANDIDATE│
                              │                   └────────────────────────────┘
                              │                                        │
                              ▼                   ┌─SP44                │
  ┌──────────────────────────────────────────────────────────────┐    │
  │ LIKELIHOOD VALUE OF WOMEN'S FIRST CANDIDATE × K2≧            │    │
  │ LIKELIHOOD VALUE OF CHILDREN'S FIRST CANDIDATE × K3          │    │
  └──────────────────────────────────────────────────────────────┘    │
                              │                                        │
                              ▼       ┌─SP45                           │
                         ╱─────────────╲          YES                  │
                        ╱ DETERMINATION  ╲──────────────────┐          │
                         ╲───────────────╱                  │          │
                              │ NO                           ▼   ┌─SP46 │
                              │                   ┌────────────────────────────┐
                              │                   │ ADOPT WOMEN'S FIRST CANDIDATE│
                              │                   └────────────────────────────┘
                              ▼       ┌─SP47                 │          │
  ┌──────────────────────────────────┐                      │          │
  │ ADOPT CHILDREN'S FIRST CANDIDATE │                      │          │
  └──────────────────────────────────┘                      │          │
                              │                              │          │
                              ▼◄─────────────────────────────┴──────────┘
                  ┌──────────────────────┐
                  │       RETURN         │
                  └──────────────────────┘
```

## FIG.9

LIKELIHOOD
DIFFERENCE
RATIO

SPEAKER

## FIG.10

LIKELIHOOD
VALUE

SPEAKER

## FIG.11

LIKELIHOOD
VALUE

SPEAKER

FIG.12

LIKELIHOOD VALUE

FIG.13

LIKELIHOOD DIFFERENCE RATIO

FIG.14

LIKELIHOOD VALUE

**FIG.15**

LIKELIHOOD VALUE

SPEAKER

**FIG.16**

LIKELIHOOD VALUE

SPEAKER

**FIG.17**

LIKELIHOOD VALUE

RANKING

- NOISE 1
- NOISE 2
- NOISE 3
- NOISE 4
- NOISE 5
- NOISE 6
- NOISE 7
- NOISE 8
- NOISE 9
- NOISE 10
- NOISE 11
- NOISE 12
- NOISE 13

# FIG.18

LIKELIHOOD
DIFFERENCE
RATIO

# FIG.19

LIKELIHOOD
VALUE

# FIG.20

LIKELIHOOD
VALUE

FIG.21

LIKELIHOOD VALUE / NOISE

**FIG.22**

START

S51

ACCEPT INPUT SPEECH OF
REGISTERED PHRASE

S52

CALCULATE LIKELIHOOD VALUE

S53 FINISH
PROCESSES FOR
PREDETERMINED NUMBER
OF PHRASES — NO

YES

S54

CALCULATE THRESHOLD $\gamma$ IN EXPRESSION 4

S55

CALCULATE THRESHOLD $\Delta$ IN EXPRESSION 3

S56

CALCULATE THRESHOLD $\alpha$ IN EXPRESSION 1

S57

CALCULATE THRESHOLD $\beta$ IN EXPRESSION 2

S58 RECOGNITION
PASS RATE IS HIGHER
THAN 80% — NO

YES

S59

ACCEPT INPUT SPEECH OF
UNREGISTERED PHRASE

S60

CALCULATE LIKELIHOOD VALUE

S63

INCREASE THRESHOLD $\beta$ IN EXPRESSION 2

S61 REJECTED — NO

YES

S62

EMPLOY CALCULATED THRESHOLD

END

## FIG.23

40

LIGHTING APPARATUS

MAIN UNIT

MICROPHONE — 9

SPEECH RECOGNITION SYSTEM — 1

RECEPTION SECTION — 42

CONTROL SECTION — 41

LIGHTING SECTION — 43

40a

## FIG.24

START

S71 ACCEPT INPUT OF SPEECH — NO

YES

S72 DETERMINE TO ADOPT "TSUKERU (TURN ON)"

S73 OUTPUT NUMBER CORRESPONDING TO "TSUKERU"

S74 PERFORM PREDETERMINED OPERATION CORRESPONDING TO NUMBER 1

END

## FIG.25

```
                    ┌─────────────┐
                    │    START    │
                    └──────┬──────┘
                           │
        ┌──────────────────▼──────────────────┐
   S81  │                                      │
 NO  ◄──┤      ACCEPT INPUT OF SPEECH          │
        └──────────────────┬──────────────────┘
                           │ YES
  S82                      ▼
 ┌───────────────────────────────────────────┐
 │ DETERMINE TO ADOPT                          │
 │ "AKARUKU ICHI (BRIGHTER 1)"                 │
 └───────────────────────┬─────────────────────┘
                          │
  S83                     ▼
 ┌───────────────────────────────────────────┐
 │ OUTPUT NUMBER CORRESPONDING TO              │
 │ "AKARUKU ICHI"                              │
 └───────────────────────┬─────────────────────┘
                          │
  S84                     ▼
 ┌───────────────────────────────────────────┐
 │ PERFORM PREDETERMINED OPERATION             │
 │ CORRESPONDING TO NUMBER 3                   │
 └───────────────────────┬─────────────────────┘
                          │
                    ┌─────▼───────┐
                    │     END     │
                    └─────────────┘
```

## FIG.26

# FIG.27

```
                    ┌─────────────┐
                    │    START    │
                    └──────┬──────┘
                           │
        ┌──────────────────▼
        │            ╱           ╲
        │      S91  ╱             ╲
        │     ╱    ╱  ACCEPT INPUT ╲
        └─── NO ──┤   OF SPEECH    │
                   ╲                ╱
                    ╲              ╱
                     ╲            ╱
                         │ YES
                         ▼
  S92  ┌──────────────────────────────────┐
       │         DETERMINE TO ADOPT        │
       │   "CHANNERU ICHI (CHANNEL 1)"     │
       └──────────────────┬───────────────┘
                          │
  S93  ┌──────────────────▼───────────────┐
       │ OUTPUT NUMBER CORRESPONDING TO    │
       │ "CHANNERU ICHI"                   │
       └──────────────────┬───────────────┘
                          │
  S94  ┌──────────────────▼───────────────┐
       │ PERFORM PREDETERMINED OPERATION   │
       │ CORRESPONDING TO NUMBER 10        │
       └──────────────────┬───────────────┘
                          │
  S95  ┌──────────────────▼───────────────┐
       │        CHANGE TO CHANNEL 1        │
       └──────────────────┬───────────────┘
                          │
                    ┌─────▼───────┐
                    │     END     │
                    └─────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003050595 A
- WO 2006093003 A
- US 2007203700 A
- US 6577997 B
- JP 9258770 A